# EUROPÄISCHE PATENTSCHRIFT

(11) **EP 4 048 074 B1**
(45) Veröffentlichungstag und Bekanntmachung des Hinweises auf die Patenterteilung: **29.01.2025**
(21) Anmeldenummer: 21729470.1
(22) Anmeldetag: 26.05.2021
(51) Int. Cl.: A01N 59/00, A01N 59/16, A01P 1/00, C02F 1/46, C02F 1/461, C02F 1/72, C09D 5/14, A01N 25/08, A01N 25/34

(54) **BIOAKTIVE ZUSAMMENSETZUNG ZUR ABTÖTUNG VON ZELLEN**
BIOACTIVE COMPOSITION FOR KILLING CELLS
COMPOSITION BIOACTIVE PERMETTANT DE TUER DES CELLULES

(30) Priorität: 26.05.2020 EP 20176476; 11.09.2020 EP 20195684
(43) Veröffentlichungstag der Anmeldung: 31.08.2022
(73) Patentinhaber: AGXX Intellectual Property Holding GmbH, 14195 Berlin (DE)
(72) Erfinder: LANDAU, Uwe, 14169 Berlin (DE); MEYER, Carsten, 10589 Berlin (DE); WAGNER, Olaf, 12163 Berlin (DE); ABUL-ELLA, Ayad, 14057 Berlin (DE)
(74) Vertreter: Remus, Alvaro Johannes
(86) Internationale Anmeldenummer: PCT/EP2021/064108
(87) Internationale Veröffentlichungsnummer: WO 2021/239842

(56) Entgegenhaltungen:
- EP-A1- 2 949 325
- UWE LANDAU ET AL: "Praxisergebnisse zur Entkeimung wässriger Lösungen mit AGXX", TECHNISCHE ARBEITSTAGUNG HOHENHEIM, 1 March 2009 (2009-03-01), Stuttgart, Germany, pages 1 - 17, XP055738397
- KEIKO JYONOSONO ET AL: "Preparation of Silver Sulfide-Coated Nickel Sulfide Monodispersed Fine Particles for Use in Solid-State Nickel Ion Selective Electrodes", SENSORS AND MATERIALS, 1 January 2000 (2000-01-01), pages 491 - 507, XP055737505, Retrieved from the Internet <URL:https://myukk.org/SM2017/sm_pdf/SM424.pdf> [retrieved on 20201007]
- QIAOQIAO YIN ET AL: "Plasmonic molybdenum oxide nanosheets supported silver nanocubes for enhanced near-infrared antibacterial activity: Synergism of photothermal effect, silver release and photocatalytic reactions", APPLIED CATALYSIS B: ENVIRONMENTAL, vol. 224, 1 May 2018 (2018-05-01), AMSTERDAM, NL, pages 671 - 680, XP055737944, ISSN: 0926-3373, DOI: 10.1016/j.apcatb.2017.11.024
- ZHANG XUE-GANG ET AL: "Constructing magnetic and high-efficiency AgI/CuFe2O4 photocatalysts for inactivation of Escherichia coli and Staphylococcus aureus under visible light: Inactivation performance and mechanism analysis", SCIENCE OF THE TOTAL ENVIRONMENT, vol. 668, 6 March 2019 (2019-03-06), pages 730 - 742, XP085645567, ISSN: 0048-9697, DOI: 10.1016/J.SCITOTENV.2019.03.068
- A. GURIDI ET AL: "New antimicrobial contact catalyst killing antibiotic resistant clinical and waterborne pathogens", MATERIALS SCIENCE AND ENGINEERING C, vol. 50, 1 May 2015 (2015-05-01), CH, pages 1 - 11, XP055738110, ISSN: 0928-4931, DOI: 10.1016/j.msec.2015.01.080
- EMANUEL CLAUSS-LENDZIAN ET AL: "Stress response of a clinical Enterococcus faecalis isolate subjected to a novel antimicrobial surface coating", MICROBIOLOGICAL RESEARCH, vol. 207, 1 March 2018 (2018-03-01), DE, pages 53 - 64, XP055738112, ISSN: 0944-5013, DOI: 10.1016/j.micres.2017.11.006
- UWE LANDAU: "AGXX - Eine nachhaltige Lösung für die Entkeimung wässriger Lösungen", GALVANOTECHNIK, 1 November 2013 (2013-11-01), Germany, pages 2169 - 2184, XP055738114, Retrieved from the Internet <URL:https://www.edelhoff-wire.de/fileadmin/Infocenter/ae-aqua-galvanotechnik-11.2013.pdf> [retrieved on 20201008]

## Beschreibung

### Hintergrund der Erfindung

Die Erfindung betrifft eine bioaktive Zusammensetzung zur Abtötung von Zellen, welche mindestens ein erstes und ein zweites Halbelement umfasst, wobei die Halbelemente zumindest mit ihren jeweiligen Oberflächen derart miteinander in elektrisch leitendem Kontakt stehen, dass in Gegenwart von Wasser und Sauerstoff Kurzschlusselemente entstehen, wobei das erste Halbelement mindestens eine halbleitende Verbindung mindestens eines Übergangsmetallelements umfasst, das über mehrere Oxidationsstufen (Wertigkeiten) verfügt und über katalytisch aktive Zentren einen Wechsel der Oxidationsstufen erlaubt, so dass am ersten Halbelement Sauerstoff reduziert wird und aktive Sauerstoffspezies entstehen, und wobei das zweite Halbelement mindestens einen elektrisch leitfähigen Silberhalbleiter umfasst, der von den Zellen oder organischer Materie abgegebene Elektronen aufnimmt.

### Stand der Technik

Die steigende Resistenz von klinisch relevanten Bakterien gegen Antibiotika und Desinfektionsmittel, einhergehend mit der Fähigkeit Biofilme zu bilden, bedeutet ein ernsthaftes Problem hinsichtlich einer effektiven und dauerhaften Keimbekämpfung in der Gesundheitsfürsorge, Industrie und im privaten Bereich. Die Weltgesundheitsorganisation (WHO) warnt immer eindringlicher vor einer dramatischen Antibiotikakrise. Bakterielle Infektionen, die sich früher gut mit Antibiotika bekämpfen ließen, wären dann nicht mehr behandelbar. Es wird daher intensiv nach neuen antimikrobiellen Lösungen gesucht. Die gleiche Resistenzproblematik trifft auch auf sehr viele biozide Wirkstoffe zu. Antimikrobiell ausgestattete Materialien können aber dazu beitragen, das Ansiedeln, Wachstum und die Übertragung von Mikroorganismen an Oberflächen zu verhindern und so einen wichtigen Beitrag zur Lösung des Antibiotika- und Biozid-Problems leisten.

Älteste Beispiele für antimikrobielle Materialien sind die sogenannten oligodynamischen Metalle (z. B. Silber, Kupfer, Zink), die durch Abgabe von Metallionen wirken. Allerdings ist die antimikrobielle Wirkung dieser Stoffe in verschiedenen Umgebungsmedien häufig durch Inhibierung limitiert, z. B. durch schwefelhaltige Verbindungen.

Aus der WO 2008/046513 A2 ist eine bioaktive, Silber, Ruthenium und ein Vitamin enthaltende metallische Beschichtung bekannt, die zur Entkeimung, Desinfektion und Dekontamination von Wasser oder wässrigen Lösungen verwendet wird. Die Kombination von Silber mit Ruthenium und einem Vitamin, beispielsweise Ascorbinsäure, führt zu einer schnelleren und effizienteren Abtötung von Mikroorganismen. Gleichzeitig verhindern diese bioaktiven Metalloberflächen die Besiedelung mit Mikroorganismen und die Anheftung oder stabile Ablagerung von problematischen Biomolekülen wie zum Beispiel DNA, RNA oder Proteinen. Durch die Beschichtung entsteht eine sich selbst reinigende Oberfläche, die bei Kontakt mit Wasser oder wässrigen Lösungen sehr schnell und effizient dessen Keimfreiheit herstellt und über längere Zeiträume aufrechterhält.

Für eine bioaktive Beschichtung bestehend aus einer metallischen Silberschicht und einer metallischen Rutheniumschicht, die mit einem Vitaminderivat konditioniert wurde, postulieren Guridi et al. [Guridi 2015] den folgenden Mechanismus für die antimikrobielle Aktivität der Beschichtung: Mikrogalvanische Elemente auf der Silber/Ruthenium-Oberfläche erzeugen ein elektrisches Feld, das auf die geladenen Membranen von Bakterienzellen einwirkt. An den Ruthenium-Mikrokathoden der galvanischen Zellen erzeugen katalytisch unterstützte Redoxreaktionen reaktive Sauerstoffspezies (ROS), z. B. diffusionsfähige Moleküle wie beispielsweise Wasserstoffperoxid, welche die Mikroorganismen abtöten und auf Agarplatten die Bildung von Hemmhöfen um entsprechend beschichtete Netze bewirken. An den Silber-/Silberchlorid-Mikroanoden der galvanischen Zellen werden die Mikroorganismen durch den Transfer von Elektronen von den Mikroben zu der halbleitenden Anodenoberfläche oxidiert.

Keiko et al. [Keiko 2000] beschreiben ein Elektrodenmaterial bestehend aus Partikeln von Silbersulfid und Nickelsulfid, die in monodisperser Form vorliegen, wobei die Partikel mit ihren Oberflächen in Kontakt zueinander stehen.

Yin et al. [Yin 2018] beschreiben eine Zusammensetzung zur Abtötung von Bakterien mit einem ersten Halbelement bestehend aus Molybdänoxid und einem zweiten Halbelement bestehend aus Silber, welche mit ihren Oberflächen in elektrisch leitenden Kontakt stehen, wobei am ersten Halbelement aktive Sauerstoffspezies entstehen.

Zhang Xue-Gang et al. [Xue-Gang 2019] beschreiben eine Zusammensetzung zur Abtötung von Bakterien mit einem ersten Halbelement bestehend aus Kupferferrit und einem zweiten Halbelement bestehend aus Silberiodid, welche mit ihren Oberflächen in elektrisch leitenden Kontakt stehen. Durch Bestrahlung mit sichtbarem Licht werden u.a. Hydroxylradikale und Superoxidradikale freigesetzt.

Clauss-Lendzian et al. [Clauss-Lendzian 2018] beschreiben die Herstellung von mit Silber und Ruthenium beschichteten Edelstahldrahtnetzen, die mit Ascorbinsäure konditioniert werden. In wässriger Umgebung läuft an der Oberfläche der Edelstahldrahtnetze in Gegenwart von organischem Material (z.B. Mikroorganismen) ein Redox-Cyclus ab, in dem das organische Material durch Silberchlorid oxidiert und das Silberchlorid zu Silber reduziert wird. Ruthenium bewirkt die Umwandlung von Sauerstoff in Wasserstoffperoxid, wobei das Ruthenium oxidiert wird. Das oxidierte Ruthenium oxidiert das Silber und wird dabei selbst reduziert, so dass beide wieder für weitere Reaktionen zur Verfügung stehen.

Landau [Landau 2013] beschreibt mit Silber beschichtete Grundkörper, die clusterförmig mit einem weiteren Edelmetall beschichtet sind. Durch die Vielzahl der diskreten Cluster des zweiten Edelmetalls werden kleine mikrogalvanische Elemente erzeugt. Die Konditionierung dieser Oberfläche mit einem Vitaminderivat erzeugt stark ausgeprägte mikroelektrische Felder bei Kontakt der Oberfläche mit Wasser oder Feuchtigkeit. Dabei entstehen an den Mikrokathoden durch eine elektrochemisch-katalytische Reduktion von im Wasser gelöstem Sauerstoff reaktive Sauerstoffspezies, die Mikroorganismen oxidativ abtöten. Bei der Berührung der Mikroben mit den Mikroanoden findet ein katalytisch unterstützter Redox-Prozess statt, bei dem die Mikroorganismen oxidiert und damit ebenfalls zerstört werden.

Aus der EP 2 949 325 A1 ist ferner eine antimikrobielle Zusammensetzung bekannt, welche metallisches Silber und metallisches Ruthenium sowie ein Vitamin oder Vitaminderivat umfasst und die zur topischen Behandlung oder Vermeidung von Erkrankungen der Haut, Hautanhangsgebilde oder Schleimhaut, die durch die Infektion mit mindestens einem Mikroorganismus verursacht werden, verwendet werden kann.

Biozide metallorganische Verbindungen werden, wie das Zinkpyrithion (ZnPT) oder das Kupferpyrithion (CuPT), in Industrie und Medizin (z. B. ZnPT in Haarwaschmitteln), Tributhylzinn (TBT) als Antifoulingzusatz zu Bootsanstrichen, Cisplatin (cis-Diamminodichloroplatin) und das als Fotosensibilisator wirkende Tris (2.2'- bipyrazyl)ruthenium(II) (Ru[bipy]²⁺) zur Krebsbekämpfung eingesetzt. Aufgrund ihrer z. T. großen Giftigkeit ist ihr Einsatz stark reguliert und wie im Fall des Tributhylzinn weitgehend verboten. Auch dem häufig eingesetzten Triclosan droht ein Verbot aufgrund des Verdachtes krebsauslösend zu sein.

Ferner sind Metalloxide in Kombination mit UV-Strahlung und der Zugabe von H₂O₂ antimikrobiell wirksam und werden industriell angewendet. Nachteile dieser Methode sind, dass für ihre Wirksamkeit elektrische Energie für die UV-Lampen eingesetzt und beständig H₂O₂ zugesetzt werden muss. Außerdem wird die UV-Einstrahlung in nicht-transparenten Flüssigkeiten reduziert, was bis zur antimikrobiellen Unwirksamkeit des Systems führen kann. Ein weiterer Nachteil besteht darin, dass das Anwendungsgebiet praktisch auf den Einsatz zur Wasserentkeimung beschränkt ist. UV-Lampen besitzen darüber hinaus eine begrenzte Lebensdauer, wobei der Anlagenstillstand und der teilweise aufwändige Umbau häufig die reinen Lampenkosten deutlich übersteigen.

### Beschreibung der Erfindung

Es ist Aufgabe der Erfindung, die genannten Nachteile des Stands der Technik, insbesondere bei der Verwendung von UV-Strahlern, zu vermeiden und eine bioaktive Zusammensetzung zur Abtötung von Zellen zur Verfügung zu stellen, die eine effiziente und langandauernde antimikrobielle Wirkung aufweist.

Die Aufgabe wird erfindungsgemäß durch eine bioaktive Zusammensetzung gemäß dem kennzeichnenden Teil des vorliegenden Anspruchs 1 gelöst. Erfindungsgemäß ist vorgesehen, dass die Übergangsmetallverbindung des ersten Halbelements Ruthenium, das in einer oder beiden der Oxidationsstufen VI und IV vorliegt, umfasst. Ruthenium ist ein Edelmetall, das mehrere Oxidationszustände besitzt und aufgrund seiner unterschiedlichen Wertigkeiten in der Lage ist, beispielsweise unterschiedliche Ruthenium-Oxide zu bilden. Oberflächen-Redox-Übergänge wie Ru(VIII)/Ru(VI), Ru(VI)/Ru(IV) und Ru(IV)/Ru(III) sind die Ursache für die hohe katalytische Aktivität der Ruthenium-Mischverbindungen und deren guten elektrischen Leitfähigkeiten. Die ungewöhnlich ausgeprägten katalytischen und elektrokatalytischen Eigenschaften der Rutheniumverbindungen hängen dabei von der Variation der Oxidationsstufen ab. Die antimikrobielle Wirkung ist beispielsweise besonders hoch bei erfindungsgemäßen Zusammensetzungen, die im ersten Halbelement Ruthenium(VI)-Oxid umfassen. Die vorliegende Erfindung umfasst somit in vorteilhafter Weise ein bioaktives Materialsystem, das jeweils aus einer halbleitenden, katalytisch aktiven Rutheniumverbindung (Halbelement I eines galvanischen Elementes) und einer halbleitenden, schwer löslichen Silberverbindung (z. B. Silberoxid, Silberhydroxid, Silbersulfid, Silber-Halogen-Verbindungen oder Kombinationen daraus; Halbelement II des galvanischen Elementes) besteht, wobei beide miteinander in direktem, elektrisch leitenden Kontakt stehen. Das Übergangsmetallelement des ersten Halbelements ist dabei erfindungsgemäß so ausgewählt, dass es über mehrere Oxydationsstufen verfügt und damit über katalytisch aktive Zentren einen (relativ leichten) Wechsel der Oxidationsstufen erlaubt. Erfindungsgemäß geeignete Rutheniumverbindungen sind also solche, in denen das Ruthenium in einer oder beiden der Oxidationsstufen VI und IV vorliegt und an denen über einen großen Potentialbereich hoch reversible Redox-Reaktionen ablaufen können. Die hohe katalytische Aktivität solcher Halbelemente für die Sauerstoffreduktion ist dabei auf den leichten Wechsel der Oxidationsstufen sowie den leichten Sauerstoffaustausch zurückzuführen, die an den aktiven Zentren der Halbleiteroberfläche bevorzugt stattfinden. Dabei wird das Übergangsmetallelement nur in seiner Wertigkeit verändert, wodurch die eigentliche Redox-Reaktion entsteht. Deshalb wird keine Übergangsmetallverbindung verbraucht oder gebildet, sondern nur die Oxidationsstufen verändert. Die Übergangsmetallverbindung bindet den molekularen Sauerstoff, wodurch dieser katalytisch reduziert werden kann. Deshalb ist das Vorhandensein von mehreren Wertigkeiten Voraussetzung für die katalytische Wirkung und die Redox-Reaktion. Es muss also keine Übergangsmetallverbindung gebildet werden. Spezielle Metalloxide bzw. Metallsulfide und schwer lösliche Silberverbindungen weisen katalytische Eigenschaften, eine elektrische Leitfähigkeit und eine hohe Stabilität in Wasser auf. Durch geeignete Materialkombination sind zwei Materialien miteinander im elektrischen Kontakt, die ein unterschiedliches elektrochemisches Potential besitzen und somit eine galvanische Zelle bilden. Wird diese Zelle über die wässrige Phase kurzgeschlossen, entsteht aufgrund der geringen Distanz (nm und/oder µm-Bereich) zwischen den beiden sich kontaktierenden Materialien eine hohe elektrische Feldstärke. Diese trägt signifikant zur Keimabtötung bei. An beiden Elektroden des mikrogalvanischen Elementes laufen dabei Redox-Reaktionen ab, die jede für sich zu einer Abtötung der Mikroorganismen führen. Am ersten Halbelement (Kathode) wird molekularer Sauerstoff zu Sauerstoffradikalen reduziert, die dann toxisch auf die Mikroorganismen wirken. Am zweiten Halbelement (Anode) werden Elektronen von den Mikroorganismen an den Silberhalbleiter abgegeben und diese dadurch oxidativ zerstört.

Die erfindungsgemäße Zusammensetzung, deren antimikrobielle Wirksamkeit nicht auf der Abgabe von Bioziden oder Metallionen, sondern auf der katalytisch unterstützten Erzeugung von Sauerstoffradikalen beruht, vorzugsweise an einer Edelmetallkombination von Silberoxid/Rutheniumoxid und/oder Silberchlorid/Rutheniumoxid, verändert seine Zusammensetzung auch bei langzeitiger antimikrobieller Anwendung nicht und benötigt im Gegensatz zu Bioziden oder oligodynamischen Metallen kein Depot oder die Biozid- bzw. Metallionenabgabe regulierende Vorrichtungen.

Die beiden Halbelemente können beispielsweise als Schichtsystem auf Oberflächen von Blechen, Drähten, Geweben oder partikulären Trägern ("Carrier") aufgebracht sein, wobei die Beschichtung des einen Materials über dem anderen Material liegt. Dabei kann die jeweils obere Schicht porös, insbesondere clusterförmig, auf das andere Material aufgetragen bzw. auf diesem abgeschieden werden, so dass die wässrige Lösung bzw. die Feuchtigkeit Zugang zu beiden Halbelementen hat und das galvanische Element kurzgeschlossen wird. Beide Materialien können aber alternativ oder zusätzlich auch als Partikel miteinander gemischt und/oder auf eine Oberfläche aufgebracht werden, so dass sie in elektrisch leitendem Kontakt stehen.

**In** einer besonders vorteilhaften Ausführungsform der Erfindung ist vorgesehen, dass das erste Halbelement Kationen des Übergangsmetallelements mit unterschiedlichen Oxidationsstufen umfasst. Die erfindungsgemäß eingesetzten ersten Halbelemente, die zu einem Elektronentransfer zum Sauerstoff (O₂) befähigt sind, sind Halbleiter mit Abweichungen von der stöchiometrischen Zusammensetzung, die vorzugsweise Kationen mit verschiedenen Oxidationsstufen an ihrer Oberfläche umfassen. Besonders geeignete Halbelemente sind dabei Oxide, Oxyhydrate, Hydroxide, Oxyhydroxide und/oder Sulfide der Übergangsmetallelemente, die in mehreren Oxidationsstufen vorliegen können, bei denen über einen großen Potentialbereich hoch reversible Redox-Reaktionen ablaufen können, die eine gute elektrische Leitfähigkeit besitzen und die eine gute chemische Stabilität aufweisen. Beispielsweise wird ein Metalloxid nur in seiner Wertigkeit verändert, wodurch die eigentliche Redox-Reaktion entsteht. Deshalb wird kein Oxid verbraucht oder gebildet, sondern nur die Oxidationsstufen verändert. Die Oxide binden den molekularen Sauerstoff, wodurch dieser katalytisch reduziert werden kann. Deshalb ist das Vorhandensein von mehreren Wertigkeiten Voraussetzung für die katalytische Wirkung und die Redox-Reaktion. Es muss also kein Metalloxid gebildet werden.

In besonders vorteilhafter Ausgestaltung der Erfindung ist daher vorgesehen, dass das die Übergangsmetallverbindung des ersten Halbelements mindestens ein Metalloxid, Metalloxyhydrat, Metallhydroxid, Metalloxyhydroxid und/oder mindestens ein Metallsulfid des Übergangsmetallelements umfasst. Die vorliegende Erfindung umfasst somit in vorteilhafter Weise ein bioaktives Materialsystem, das vorzugsweise jeweils aus einem halbleitenden, katalytisch aktiven Übergangsmetalloxid bzw. Übergangsmetallsulfid (Halbelement I des galvanischen Elementes) und einer halbleitenden, schwer löslichen Silberverbindung (Silberoxid, Silberhydroxid, Silbersulfid, Silber-Halogen-Verbindungen oder Kombinationen daraus; Halbelement II des galvanischen Elementes) besteht.

Der Silberhalbleiter des zweiten Halbelements verfügt vorzugsweise über katalytische Aktivität. Beispielsweise reagieren die Zwischengitter-Silberionen in Silber-Halogenid-Kristallen mit eingefangenen Elektronen und bilden im weiteren Verlauf der Reaktion Silbercluster. Die Stellen, an denen die Elektronen eingefangen werden, sind die aktiven Zentren im Silber-Halogenid-Kristall. Das Silber-Halogenid wirkt dabei als Katalysator und wird nicht verbraucht. Wird das durch das Elektronentrapping reduzierte Silber anodisch wieder re-oxidiert, dann ergibt sich ein Kreislaufprozess, bei dem aber keine Silberionen aus dem Silberhalogenid-Kristall abgegeben werden. Alle Silberionen bleiben vielmehr in dem Silber-Halogenid-Kristall gebunden.

In weiterer vorteilhafter Ausgestaltung der Erfindung ist vorgesehen, dass der Silberhalbleiter des zweiten Halbelements so ausgewählt ist, dass er in wässrigen Lösungen eine geringe Löslichkeit aufweist und gegenüber Inhaltsstoffen in der wässrigen Lösung chemisch stabil ist. Beispielsweise besitzt Silber-Sulfid von allen anorganischen Verbindungen in weitem pH-Bereich die geringste Löslichkeit für das Metallion, so dass die Abgabe von Silberionen keine Rolle für die antimikrobielle Wirkung bei einem solchen Halbelement spielt.

Der Silberhalbleiter des zweiten Halbelements kann in vorteilhafter Weise mindestens ein Silberoxid, Silberhydroxid, Silberhalogenid und/oder Silbersulfid umfassen. Der Silberhalbleiter kann beispielsweise auch eine Kombination von Silber und einer entsprechenden Silberverbindung (beispielsweise metallisches Silber, das an seiner Oberfläche eine Silberverbindung wie z.B. Silberoxid oder Silberchlorid aufweist), umfassen.

In vorteilhafter Ausgestaltung der Erfindung ist dabei vorgesehen, dass in das Halbleitergitter des Silberhalogenids Sulfid-Anionen eingebaut sind (Sulfid-Dotierung). Beispielsweise kann dabei im Halbleitergitter des Silberhalogenids ein Redox-Prozess stattfinden, so dass keine Silberionen abgegeben werden müssen, um die von den Zellen abgegebenen Elektronen aufnehmen zu können. Erfindungsgemäß bevorzugte sulfidische Halbelement-Systeme sind insbesondere Silbersulfid bzw. Silberchlorid/Silbersulfid mit Nickelsulfid und/oder Molybdänsulfid.

Die oben beschriebene erfindungsgemäße bioaktive Zusammensetzung ist vorzugsweise frei von Ascorbinsäure.

Die oben beschriebene erfindungsgemäße bioaktive Zusammensetzung kann beispielsweise durch ein Verfahren hergestellt werden, bei dem die beiden Halbelemente auf mindestens ein Trägermaterial und/oder aufeinander aufgebracht werden, wobei die beiden Halbelemente derart aufgebracht werden, dass sie zumindest mit ihren jeweiligen Oberflächen miteinander in elektrisch leitendem Kontakt stehen.

Vorzugsweise wird das erste Halbelement in Form einer porösen (clusterförmigen) Schicht auf das zweite Halbelement oder das zweite Halbelement in Form einer porösen (clusterförmigen) Schicht auf das erste Halbelement aufgebracht. Die beiden Halbelemente können also in vorteilhafter Weise als Schichtsystem so auf Oberflächen, z. B. von Blechen, Drähten, Geweben oder partikulären Trägern ("Carrier"), aufgebracht werden, dass sie in elektrisch leitendem Kontakt stehen. Dabei kann die jeweils obere Schicht porös, insbesondere clusterförmig, auf das andere Material aufgetragen bzw. auf diesem abgeschieden werden, so dass wässrige Lösungen bzw. Umgebungsfeuchtigkeit Zugang zu beiden Halbelementen haben und dadurch das galvanische Element kurzgeschlossen wird.

Das erste Halbelement kann beispielsweise in Schichtdicken von 2 nm bis 500 nm, vorzugsweise von 10 bis 100 nm, auf das zweite Halbelement aufgebracht werden.

Das jeweilige Halbelement kann sequenziell oder gleichzeitig mittels elektrochemischer Abscheidung, chemisch-reduktiver Abscheidung, elektrophoretischer Beschichtung, Calcinieren, PVD-, CVD- und/oder Sol-Gel-Verfahren aufgebracht werden.

Bei der Calcinierung werden thermisch leicht zersetzbare Verbindungen, die die gewünschten Übergangsmetalle (meist wasserfrei) enthalten, z.B. in Alkoholen (z.B. Ethanol oder Isopropanol), intensiv gemischt, auf die zu beschichtende Oberfläche aufgetragen und anschließend bei hohen Temperaturen (z.B. 200-500 °C) bei Luftanwesenheit thermisch zersetzt. Dabei kann durch Mischung der beiden Metallsalze jede gewünschte Zusammensetzung der beiden Halbelement-Metalle eingestellt werden, um die entsprechenden oxidischen Verbindungen zu erzielen. Zu den leicht zersetzbaren Rutheniumverbindungen gehört beispielsweise das RuCl₃ (Halogenide allgemein).

Das Aufbringen des erstes Halbelements umfasst mindestens einen Schritt mit starker oxidativer Wirkung. Beispielsweise können Ruthenium/Ruthenium-Oxide in einem zweistufigen Verfahren abgeschieden werden, wobei im ersten Schritt zunächst eine Aufoxidation von Ruthenium erfolgt und erst im zweiten Schritt die Reduktion des aufoxidierten Rutheniums zu Ruthenium und RuOx durchgeführt wird. Anders als bei der direkten, einstufigen Reduktion der Ru(III)-Ionen durch ein starkes Reduktionsmittel, beruht dieses indirekte, zweistufige Verfahren auf der Oxidation von Ru(III)-Ionen zu Ruthenium(VIII)-oxid (RuO₄). RuO₄ ist ein starkes Oxidationsmittel, das durch geeignete Reduktionsmittel in Ruthenium(IV)-Oxid überführt wird, wobei das Substrat mit einer Schicht an Ruthenium(IV)-Oxid überzogen wird. Beispielsweise kann die Bildung von Ruthenium(VI)-Oxid sowohl bei einer elektrochemischen wie bei einer PVD Abscheidung von Ruthenium erzielt werden, wenn die Ruthenium-Abscheidung einen Prozessschritt mit starker oxidativer Wirkung umfasst.

Zusätzlich oder alternativ können die beiden Halbelemente in Form einzelner Partikel auf der Oberfläche des Trägermaterials aufgebracht werden. Dabei kann es sich beispielsweise um Bimetallpartikel, die beide Metalle umfassen, und/oder Metallpartikel, die jeweils nur eines der beiden Metalle umfassen, handeln. Letztere können sequenziell, d.h. erst Partikel des ersten Metalls und dann Partikel des zweiten Metalls (oder umgekehrt), oder gleichzeitig als Gemisch von Partikeln beider Metalle so auf das Trägermaterial aufgebracht werden, dass sie in elektrisch leitendem Kontakt stehen. Die Partikel können einschichtig (nebeneinander liegend) und/oder zumindest teilweise mehrschichtig (übereinander liegend) auf dem Trägermaterial aufgebracht sein.

Das zweite Halbelement kann mittels einer sulfidischen Behandlung in Silbersulfid (Ag₂S) umgewandelt werden und/oder ein Metallsulfid des ersten Halbelements ann kdurch sulfidische Behandlung eines Metalloxids/-hydroxids oder eines Metallhalogenids erzeugt werden.

Der Silberhalbleiter kann durch eine Reaktion in einer halogenid-haltigen wässrigen Lösung (z. B. chloridische Lösung) in ein Silberhalogenid umgewandelt werden.

Nach dem Aufbringen der beiden Halbelemente kann eine thermische Nachbehandlung zur Einstellung spezifischer Oxidationsstufen durchgeführt werden. Die abgeschiedenen oxidischen Halbelement-Beschichtungen können, thermisch beständige Trägerwerkstoffe vorausgesetzt, zur Einstellung spezifischer Oxidationsstufen einer thermischen Oxidation bzw. Reduktion in geeigneter Atmosphäre unterzogen werden.

Die beiden Halbelemente können beispielsweise auf Metallen, Glas oder Kunststoffen und/oder auf Trägerpartikeln (z. B. Glaspartikel, Silberpartikel, Kunststoffpartikel, Nanoton-Partikel, Cellulosefasern, Kohlenstoffpartikel oder Zeolith-Pulver) aufgebracht werden. Dabei können einzelne Halbelement-Partikel derart miteinander vermengt werden (z. B. durch Mörsern), dass sie in elektrisch leitendem Kontakt miteinander stehen. Die beiden Halbelemente können beispielsweise als mikroporöses Schichtsystem oder in Form von Partikeln auf das jeweilige Material aufgebracht werden, so dass sie in elektrisch leitendem Kontakt stehen.

Die Halbelement-Partikel können in Wasser und Sauerstoff aufnehmende Medien wie Sol-Gele (z. B. Siloxane), Cremes, Hydrogele, Lacke, Farben, Putze, Kunststoffe (z. B. Polyamide) und Cellulose integriert oder darauf aufgebracht werden.

"Halbelement" im Sinne der Erfindung bezeichnet einen Teil eines galvanischen Elements, der dieses in Verbindung mit mindestens einem weiteren Halbelement bildet. Ein Halbelement umfasst dabei eine Metallelektrode, die sich zumindest teilweise in einem Elektrolyten befindet.

"Galvanisches Element" im Sinne der Erfindung bezeichnet die Kombination von zwei unterschiedlichen Metallen, die in einem gemeinsamen Elektrolyten jeweils eine Elektrode (Anode bzw. Kathode) bilden. Stehen die beiden Metallelektroden miteinander in direktem Kontakt oder sind sie über einen Elektronenleiter elektrisch leitend miteinander verbunden, gibt das unedlere Metall mit dem niedrigeren Redoxpotential (Elektronendonator, Anode) Elektronen an das edlere Metall mit dem höheren Redoxpotential (Elektronenakzeptor, Kathode) ab und setzt in Folge die Redoxprozesse an den Elektroden in Gang.

"Elektrolyt" im Sinne der Erfindung bezeichnet einen Stoff (z. B. Ionen in wässriger Lösung), der unter dem Einfluss eines elektrischen Feldes durch die gerichtete Bewegung von Ionen elektrischen Strom leitet.

"Metall" im Sinne der Erfindung bezeichnet Atome eines chemischen Elements des Periodensystems der Elemente (alle Elemente, die keine Nichtmetalle sind), die mittels metallischer Bindungen ein Metallgitter und dadurch ein makroskopisch homogenes Material bilden, das sich u.a. durch eine hohe elektrische Leitfähigkeit und eine hohe Wärmeleitfähigkeit auszeichnet. Der Begriff "Metall" umfasst auch Legierungen, die mindestens zwei unterschiedliche Metalle umfassen, Metallverbindungen wie z.B. Metalloxide, Metalloxyhydrate, Metallhydroxide, Metalloxyhydroxide, Metallhalogenide und Metallsulfide, sowie Kombinationen von Metallen und entsprechenden Metallverbindungen.

"Partikel", "partikelförmig" oder "partikulär" im Sinne der Erfindung bezeichnet einzelne teilchenförmige Körper, die als Ganzes gegenüber anderen Partikeln und ihrer Umgebung abgegrenzt sind. Dabei sind im Rahmen der Erfindung alle möglichen Partikelformen und -größen, unabhängig von Geometrie und Masse, eingeschlossen. Eine Charakterisierung der Partikel kann beispielsweise über ihre Form, ihr Gewicht, ihr Volumen und/oder ihre Größe (z.B. Länge, Durchmesser, Umfang) erfolgen.

"Schicht" oder "schichtförmig" im Sinne der Erfindung bezeichnet eine zwei- oder dreidimensionale Struktur, die eine horizontale Ausdehnung hat und zumindest durch zwei Flächen, die Schichtunterseite und die Schichtoberseite, begrenzt ist. Dabei kann eine Schicht aus einem zusammenhängenden Material bzw. Stoff und/oder sich zumindest teilweise berührenden Partikeln bestehen. Eine Schicht kann im Sinne der Erfindung homogen, heterogen, durchgehend (d.h. ununterbrochen), clusterförmig, nanoporös und/oder mikrorissig ausgebildet sein. "Beschichtet" im Sinne der Erfindung ist ein Material, Partikel oder sonstiger Körper, wenn zumindest ein Teil seiner (äußeren oder inneren) Oberfläche mit einer "Schicht" (siehe oben) versehen ist.

### Beschreibung bevorzugter und beispielhafter Ausführungsformen der Erfindung

### Metalloxid- bzw. Metallsulfid-Halbelement I:

Viele Oxide der Nebengruppenmetalle zeigen eine hohe elektrokatalytische Aktivität in Bezug auf die Entwicklung bzw. Reduktion von Sauerstoff oder der Oxidation von organischen Verbindungen. Metalloxide sind Halbleiter, die z. T. über eine gute elektrische Leitfähigkeit verfügen. Für die Sauerstoffreduktion ist eine nichtstöchiometrische Zusammensetzung des Oxides wesentlich. Die elektrokatalytischen Eigenschaften und die elektrische Leitfähigkeit hängen von der Variation der Oxidationsstufen und der Beweglichkeit der Kationen, insbesondere in der Oberflächennähe ab. Reaktive Sauerstoffspezies, die an Feststoffoberflächen adsorbiert sind, sind wichtige Zwischenprodukte an der Flüssig/Feststoff-Phasengrenze, was insbesondere auf einige Metalloxide zutrifft. Sie sind bei diesen Metalloxiden-Oberflächen für deren antimikrobielle Eigenschaften verantwortlich. So werden beispielsweise hochreaktive Superoxidanionen-Spezies durch einen katalytischen Prozess gebildet [Anpo 1999, 189]. Wenn sich molekularer Sauerstoff im Kontakt mit der Metalloxid-Oberfläche befindet, können z. B. Superoxidanionen-Radikale (O²⁻) gebildet werden. Der elektrostatische Beitrag zur Stabilisierung der Anionen-Spezies auf das positive Ion an der Oberfläche spielt dabei eine fundamentale Rolle [Pacchioni 1996]. Superoxidanionen-Radikale sind nicht die einzigen Zwischenprodukte, die an Metalloxiden entstehen, sondern auch H₂O₂ und Hydroxylradikale OH* [Anpo 1999].

Oxide, die zu einem Elektronentransfer zum Sauerstoff (O₂) befähigt sind, sind in den meisten Fällen Halbleiter mit Abweichungen von der stöchiometrischen Zusammensetzung und besitzen Kationen mit verschiedenen Oxidationsstufen an ihrer Metalloxidoberfläche. Besonders geeignete Metalloxide für das erfindungsgemäße bioaktive Metalloxid-Silberhalbleiter-System sind Übergangsmetalloxide, die in mehreren Oxidationsstufen vorliegen können, bei denen über einen großen Potentialbereich hoch reversible Redox-Reaktionen ablaufen können, die eine gute elektrische Leitfähigkeit besitzen und die eine gute chemische Stabilität aufweisen (z. B. Rutheniumoxide, Iridiumoxide, Vanadiumoxide, Manganoxide, Nickeloxide, Eisenoxide, Cobaltoxide, Ceroxide, Molybdänoxide und Wolframoxide). Aufgrund dieser ausgezeichneten Eigenschaften sind mehrere dieser Metalloxide als Elektrodenmaterialien in sogenannten Superkondensatoren (supercaps) im Einsatz. Die hohe katalytische Aktivität für die Sauerstoffreduktion dieser Metalloxide ist auf den leichten Wechsel der Oxydationsstufen wie des leichten Sauerstoffaustausches zurückzuführen, die an den aktiven Zentren der Oberfläche bevorzugt stattfinden. Die meisten technisch interessanten Metalloxidbeschichtungen, besonders kohärente Oxid-Beschichtungen auf Metallen oder auf einem Halbleiter sind amorph, weil nur amorphe Filme dick genug wachsen können.

Die Reduktion von molekularem Sauerstoff an Übergangsmetalloberflächen mit etwas reduzierten Oxiden spielt eine wichtige Rolle bei den komplexen Redox-Reaktionen, die an der Übergangsmetalloxidoberfläche ablaufen können. Damit die an den Metalloxiden möglichen Redox-Reaktionen und die Reduktion von Sauerstoff zu reaktiven Sauerstoffspezies (ROS) dauerhaft ablaufen können, müssen die Metalloxide die Sauerstoffreduktion katalytisch unterstützen und Elektronen nachgeliefert werden. Dies kann überraschender Weise durch elektrisch leitende Koppelung geeigneter katalytisch aktiver Metalloxide bzw. Metallsulfide an Silberhalbleiterverbindungen sichergestellt werden. Durch die elektrische Koppelung entsteht ein galvanisches Element, in dem die Elektronen z. B. von der Silberhalbleiter-Elektrode durch Oxidation der Mikroorganismen an die Metalloxidoberfläche geliefert werden. Zu den Übergangsmetallhalbleitern, die über eine gute Elektronenleitung verfügen, gehören auch einige Metallsulfide wie das Nickelsulfid (NiS) und das Molybdändisulfid (MoS₂) mit katalytischer Aktivität, um reaktive Sauerstoffverbindungen wie H₂O₂ zu bilden.

Erfindungsgemäß umfasst die halbleitende Übergangsmetallverbindung des ersten Halbelements Ruthenium, das in einer oder beiden der Oxidationsstufen VI und IV vorliegt.

### Silberhalbleiter-Halbelement II:

Die Phasengrenze Silber/Silbersulfid (Ag₂S) wird von zwei Phasen mit Elektronenleitung gebildet. Ag₂S kann auf einer Silberoberfläche einfach durch eine Tauchbehandlung in einer wässrigen Sulfid-haltigen Lösung erzeugt werden, was an der Dunkelfärbung während des Tauchvorgangs leicht verfolgt werden kann. Silber-Sulfid besitzt von allen anorganischen Verbindungen in weitem pH-Bereich die geringste Löslichkeit für das Metallion, so dass die Abgabe von Silberionen, wie bei der oligodynamischen antimikrobiellen Silbertechnologie, keine Rolle für die antimikrobielle Wirkung bei diesem Halbelement spielt. An der Phasengrenze NiS/Ag₂S treten keine ternären Phasen auf, so dass das chemische Potential des Schwefels im Gleichgewicht mit dem Ag₂S steht. Die beiden Metallsulfide im elektrisch leitenden Kontakt haben sich als überraschend wirksames bioaktives Schichtsystem erwiesen.

Molybdändisulfid (MoS₂) ist ein Elektronenleiter, dessen Leitfähigkeit und katalytische Aktivität, reaktive Sauerstoffspezies zu bilden, bei Belichtung noch zunimmt. Molybdändisulfid ist in Wasser und verdünnten Säuren nicht löslich. Silberhalogenide wie AgBr, AgCl, AgJ weisen im Gegensatz zu den Alkalihalogeniden hohe kovalente Bindungsanteile auf. Auf diese Struktureigenschaft, die auf der hohen Polarisierbarkeit des Silberions basiert, ist auch die geringe Löslichkeit der Silberhalogenide (AgX) zurückzuführen (AgCl > AgBr > AgJ > Ag₂S). Silberhalogenide können als intrinsische Halbleiter mit einer ausgeprägten Bandstruktur angesehen werden. Normalerweise liegt die Leitfähigkeit von AgX im Bereich der von Halbleitern. Wegen der höheren Beweglichkeit der Elektronen verhalten sich die Silberhalogenide wie n-Typ Halbleiter. Silberhalogenide (z. B. AgBr, AgCl, AgJ) werden z. B. in der Fotographie, aber auch für die photolytische Wasserzersetzung eingesetzt.

In der Realstruktur des Silberhalogenid-Kristalls treten als Folge von Defekten lokalisierte Energieniveaus innerhalb der verbotenen Zone, d. h. im energetischen Bereich zwischen Valenz- und Leitungsband, auf. Je nach energetischer Lage können diese als Elektronen-Donor oder Akzeptorfallen wirken. Zusätzlich zeigen reale Silberhalogenid-Kristalle auch strukturelle Fehlordnungen wie z. B. Verwerfungen, Stufen und Versetzungen. Diese spielen für die Ausbildung von aktiven Zentren im Silberhalogenid-Kristall eine wichtige Rolle [Baetzold 2001]. Die aktiven Zentren im Silberhalogenid-Kristall sind u.a. für die Prozesse in der Fotographie und bei der Fotolyse entscheidend. Es ist weithin akzeptiert, dass Zwischengitter-Silberionen mit eingefangenen Elektronen reagieren und Silbercluster bilden. Das Elektron wird an einer ausgezeichneten Stelle (aktives Zentrum) an der Oberfläche eingefangen. Das Zwischengitter-Silberion wandert zum eingefangenen Elektron. Im weiteren Verlauf bilden sich durch gleiche Reaktionen einige größere Silbercluster. An Silber-Bromid (AgBr ist dem AgCl sehr ähnlich) konnte gezeigt werden, dass z. B. der Foto-Mechanismus mit einem instabilen Silberatom beginnt. Während der Atomlebenszeit kann ein Elektron zum instabilen Atom diffundieren und ein Silber-Anion bilden, das anschließend ein Zwischengitter-Silberion neutralisieren kann:

Ag ⁻ (im AgCl-Gitter) + Ag⁺ (AgCl-Zwischengitterplatz) → Ag₂ (0) (im AgCl-Gitter)

Auf diese Weise kann das Silber-Atom Elektronen einfangen und nachfolgend zu einem dimeren Silber werden [Baetzold 2001]. Stellen, an denen die Elektronen eingefangen werden, sind die aktiven Zentren im Silber-Halogenid-Kristall. Das Silber-Halogenid wirkt als Katalysator und wird nicht verbraucht. Wird das durch das Elektronentrapping reduzierte Silber anodisch wieder re-oxidiert, dann ergibt sich ein Kreislaufprozess. Bei diesem Kreislaufprozess werden keine Silberionen aus dem AgCl-Kristall abgegeben. Alle Silberionen sind in dem Silber-Halogenid-Kristall gebunden. In das Silberchlorid-Gitter können durch eine sulfidische Behandlung Ag₂S-Teilchen gebildet werden, die in dem AgCl-Halbleiter ebenfalls als Elektronenfallen wirken und zusätzlich negative Ladungen einfangen können. Dieser Prozess entspräche dem Modell des "Ag₂S-Reifekeims" bei der Erklärung der fotographischen Elementarprozesse. Danach kann auch durch die AgCl/Ag₂S-Oberfläche des galvanischen Halbelementes, katalytisch unterstützt, die Aufnahme von Elektronen von Mikroorganismen und die oxidative Abtötung von Mikroorganismen erfolgen.

Die Erfindung wird im Weiteren anhand der folgenden Abbildungen und Beispiele exemplarisch näher erläutert.

### Kurze Beschreibung der Abbildungen

**Figur 1** zeigt eine fotografische Abbildung elektrochemisch präparierter Rutheniumoxid-Schichten auf Silber/Silberchlorid.
**Figur 2** zeigt fotografische Abbildungen von Teilen zweier Kulturplatten. Für die Bestimmung der antimikrobiellen Effizienz der Rutheniumoxid-Schichten auf Silber/Silberchlorid wurde eine Suspensionskultur mit Bakterien von E. coli (DSM 498, 10⁷/ml) mit 50 µl ausplattiert. Anschließend wurden die Probenbleche auf einen LB-Agar aufgebracht und für 18 h bei 37 °C inkubiert. Die beschichtete Probenseite ist mit einem Pfeil markiert.
   a) (a) 10 Zyklen, (b) 25 Zyklen, (c) 50 Zyklen [Pfeil: alle Proben zeigen einen großen Hemmhof];
   b) (b) Ruthenium-Pulver mit Silberpartikeln vermengt [kein Hemmhof], (c) Rutheniumoxid-Pulver* mit Silber/Silberchlorid-Partikeln*** vermengt [großer Hemmhof] (deutliche antimikrobielle Wirkung gegen 10 exp7 E. coli (DSM 498) mit 200 µl auf LB Agar ausplattiert und 18 h bei 37 °C inkubiert).

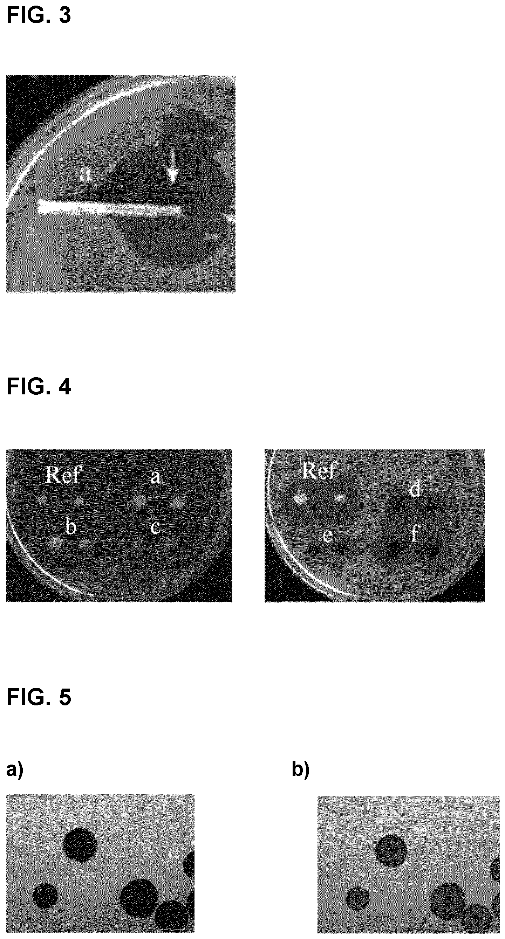

**Figur 3** zeigt eine fotografische Abbildung des Teils einer Kulturplatte. Eine mit K₂S-behandelte, elektrochemisch hergestellte poröse Rutheniumoxid-Schicht auf einem Silber-Blech zeigt eine sehr große antimikrobielle Wirksamkeit [sehr großer Hemmhof, der trotz partieller einseitiger Beschichtung (Pfeil) kantenumgreifend ist und auf die Bildung von Sauerstoffradikalen zurückgeführt werden kann]; (10 exp7 E. coli (DSM 498) mit 200 µl auf LB Agar ausplattiert und 18 h bei 37 °C inkubiert).
**Figur 4** zeigt fotografische Abbildungen von Teilen zweier Kulturplatten. Antimikrobielle Aktivität von elektrolytisch mit Rutheniumoxid porös beschichteten, versilberten Glaskügelchen (D = 40 µm), Ruthenium-Elektrolyt: Rutheniumnitrosylnitrat; Nachbehandlung in chloridischer Lösung mit Bildung von Silberchlorid der durch die Poren zugänglichen Silberoberfläche der Glaskügelchen; (10 exp7 E. coli (DSM 498) mit 200 µl auf LB Agar ausplattiert und 18 h bei 37 °C inkubiert). Nachbehandlung mit K₂S und unterschiedlicher Ruthenium-Beschichtungsdauer (t), die bei dem langsam abscheidenden Rutheniumnitrosylnitrat-Elektrolyten deutlich länger für die gleiche Schichtdicken als im Rutheniumchlorid-Elektrolyten dauert:
   a) Probe 42, t = 1 h; b) Probe 43, t = 2 h; c) Probe 44, t = 3 h; d) Probe 42, t = 1 h, Inkubation in K₂S; e) Probe 43, t = 2 h, Inkubation in K₂S; f) Probe 44, t = 3 h, Inkubation in K₂S.
**Figur 5** zeigt fotografische Abbildungen von Fibroblasten der Maus. Biozide Wirkung der Rutheniumoxid/Silberchlorid-Partikel (D = 40 µm) auf adhärente Mäusezellen: (a) Start; (b) nach 180 min (Rotfärbung (hier in schwarz/weiß nicht sichtbar) zeigt Abtötung der Mäusefibroblasten an).

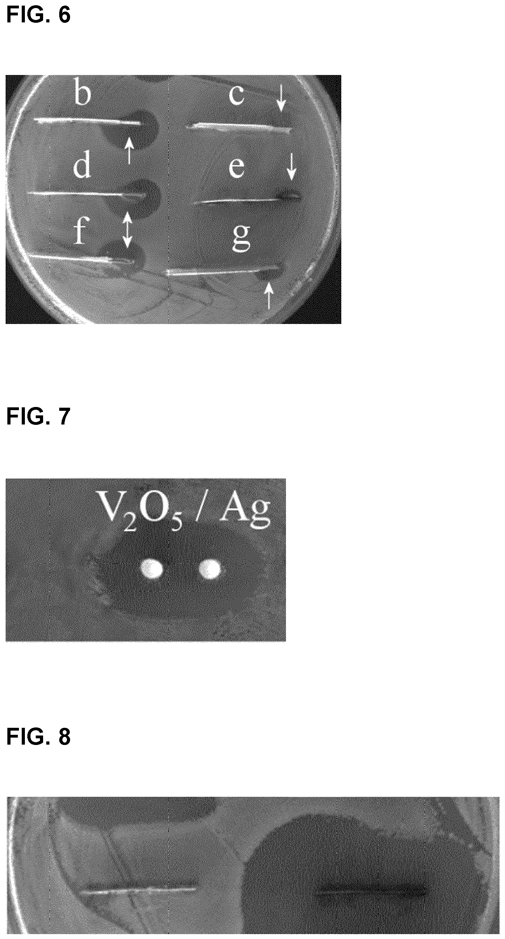

**Figur 6** zeigt eine fotografische Abbildung einer Kulturplatte. Antimikrobielle Effizienz von Vanadiumoxid-Schichten auf Silber/Silberchlorid- bzw. Silber/Silbersulfid-Blech; 10 exp7 E. coli (DSM 498) mit 200 µl auf LB Agar ausplattiert und 18 h bei 37 °C inkubiert):
   b) Vanadiumoxid auf Silber/Silberchlorid, 1 min Beschichtungsdauer;
   d) Vanadiumoxid auf Silber/Silberchlorid, 10 min Beschichtungsdauer;
   f) Vanadiumoxid auf Silber/Silberchlorid, 30 min Beschichtungsdauer;
   c) Vanadiumoxid auf Silber, 1 min Beschichtungsdauer, K₂S-Nachbehandlung;
   e) Vanadiumoxid auf Silber, 10 min Beschichtungsdauer, K₂S-Nachbehandlung;
   g) Vanadiumoxid auf Silber, 30 min Beschichtungsdauer, K₂S-Nachbehandlung.
**Figur 7** zeigt eine fotografische Abbildung des Teils einer Kulturplatte. Antimikrobielle Aktivität von Vanadiumoxid-Silber/Silberchlorid-Glaskügelchen (D = 40µm); 10 exp7 E. coli (DSM 498) mit 200 µl auf LB Agar ausplattiert und 18 h bei 37 °C inkubiert).
**Figur 8** zeigt eine fotografische Abbildung des Teils einer Kulturplatte. Antimikrobielle Aktivität von Nickeloxid-Silber/Silberchlorid und Nickelsulfid auf Silber/Silbersulfid-Blech; 10 exp7 E. coli (DSM 498) mit 200 µl auf LB Agar ausplattiert und 18 h bei 37 °C inkubiert).
   Links: Nickeloxid-Silber/Silberchlorid: Sehr geringe antimikrobielle Aktivität [sehr geringer Hemmhof];
   Rechts: Nickelsulfid-Silber/Silbersulfid: Überraschende starke antimikrobielle Aktivität [großer Hemmhof].

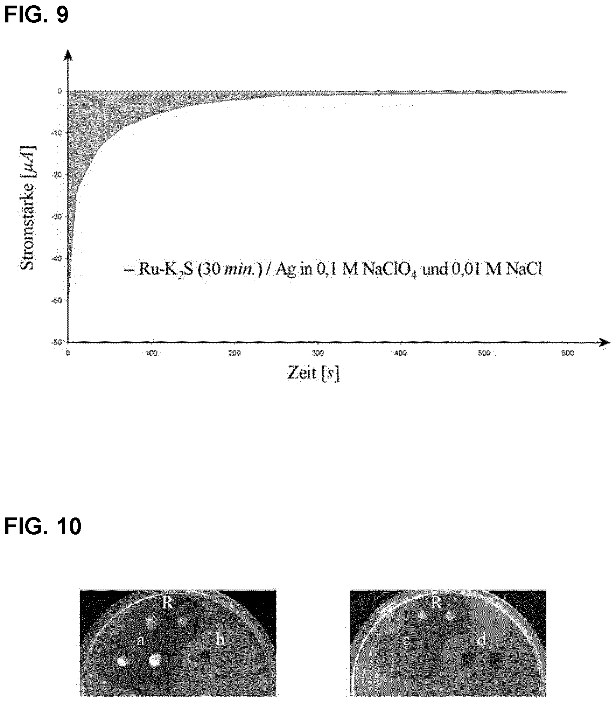

**Figur 9** zeigt eine Strom-Zeit-Kurve von Silber und Ruthenium bei Kurzschluss in 0,1 M NaClO4 und 0,01 M NaCl nach Inkubation der Ruthenium-Elektrode in 1-%iger Kaliumsulfid-Lösung für 30 Minuten.
**Figur 10** zeigt fotografische Abbildungen von Teilen zweier Kulturplatten zur Verdeutlichung der antimikrobiellen Aktivität von Pulvermischungen; a) Silber / Ruthenium nach Inkubation in K₂S; b) Silber / Rutheniumoxid nach Inkubation in K₂S; c) Silbersulfid / Ruthenium nach Inkubation in K₂S; d) Silbersulfid / Rutheniumoxid nach Inkubation in K₂S; R) Referenzprobe; Ref.-Nr. mB-003-2013.

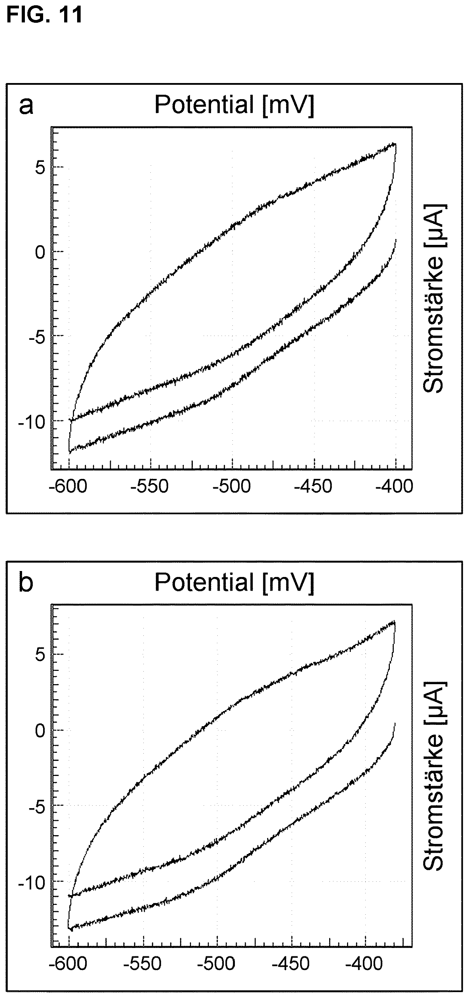

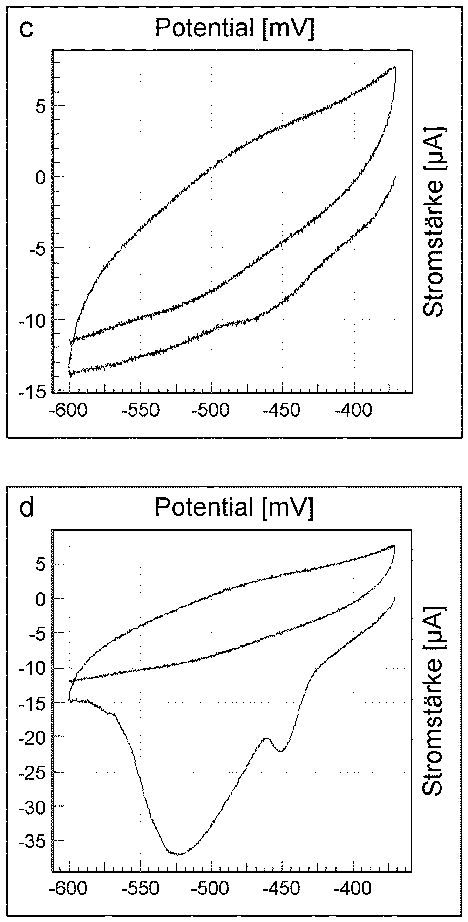

**Figur 11** zeigt Strom-Spannungskurven zur Reduktion der gebildeten Silberchlorid-Schicht für die Elektrodenkombination Ag / RuOₓ nach Inkubation der RuOₓ-Elektrode in 1 %-iger K2S; Strom-Spannungskurve vs. Ag/Ag⁺ (0,1 M), 10 mV/s; a) nach 1 Stunde; b) nach 2 Stunden; c) nach 3 Stunden; d) nach 4 Stunden.

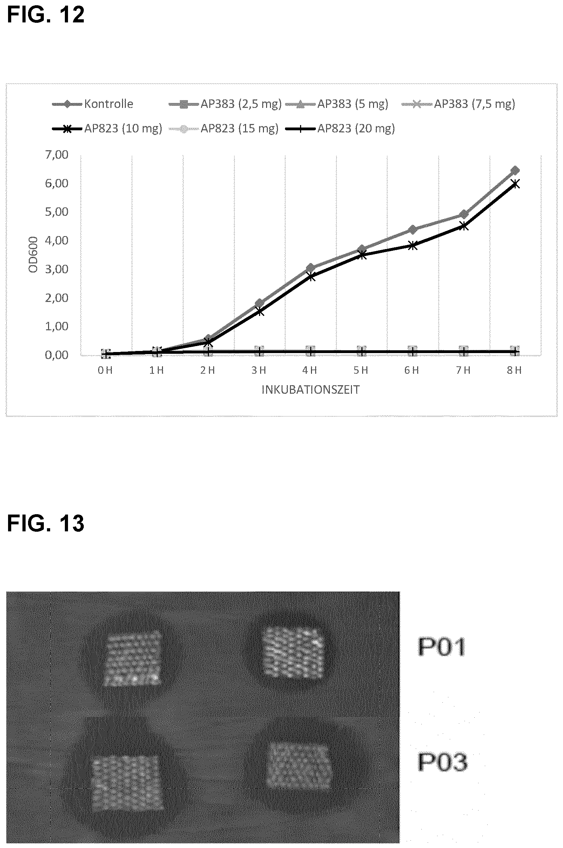

**Figur 12** zeigt Wachstumskurven von MRSA-Bakterien bei Einsatz von zwei, nach unterschiedlichen Ruthenium-Abscheideverfahren hergestellten, Ruthenium/Ruthenium-Oxid//Silber/Silberchlorid (Ru/RuOx//Ag/AgCl) - Pulvern (AP 383 und AP 823) für verschiedene Pulvermengen.
**Figur 13** zeigt eine fotografische Abbildung des Teils einer Kulturplatte mit einem Vergleich der Proben Ru (P01) und RuOx (P03) hinsichtlich ihrer antimikrobiellen Wirkung. P01: PVD beschichtete PE-Folie (Probe Ru) und P03: PVD oxidierend beschichtete Folie (Probe RuOx); beide in 2-fach Bestimmung (LB Agar, 3 Tage bei 30 °C; Suspensionskultur mit Bakterien von E. coli (DSM 498); 10exp8/ml mit 200 mikro Liter ausplattiert).

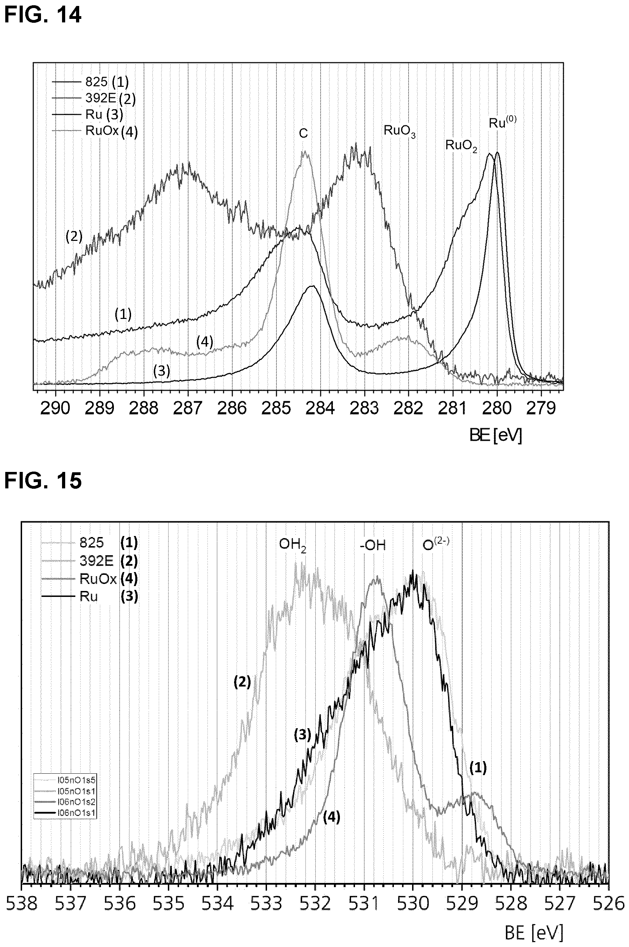

**Figur 14** zeigt eine XPS-Oberflächenanalyse (Ru3d-Spektren) der galvanisch hergestellten Ru/RuOx//Ag/AgCl - Pulverproben 825 und 392 sowie der Ru/RuOx//Ag/AgOx-PVD - Beschichtungen auf Polyethylen-Folien (Proben Ru und RuOx).
**Figur 15** zeigt O1s-Spektren zu den Proben 825, 392, Ru, RuOx.

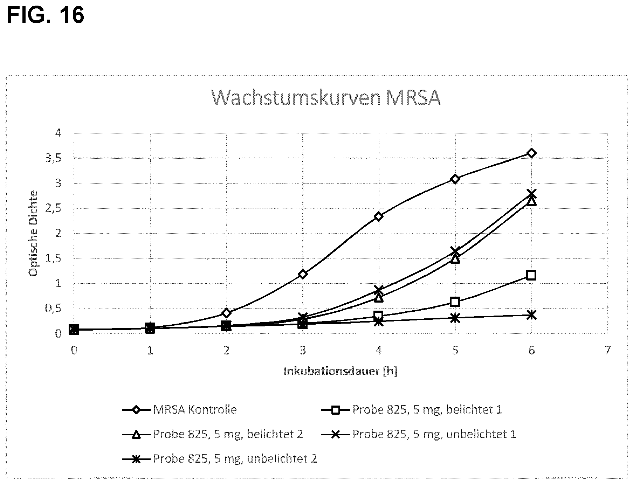

**Figur 16** zeigt Wachstumskurven von Ru/RuOx//Ag/AgCl-Pulver (825, Basis Silberpartikel) mit (belichtet) und ohne (unbelichtet) sichtbare Lichteinstrahlung.

### Beispiele

Für alle Versuche an Elektroden wurden reine Silberbleche oder Silberbeschichtungen als Beschichtungsunterlage gewählt, um potentiell störende Effekte durch Fremdmetalle auszuschließen.

### Beispiel 1: Poröse Rutheniumoxid-Schicht auf Silber/Silberchlorid

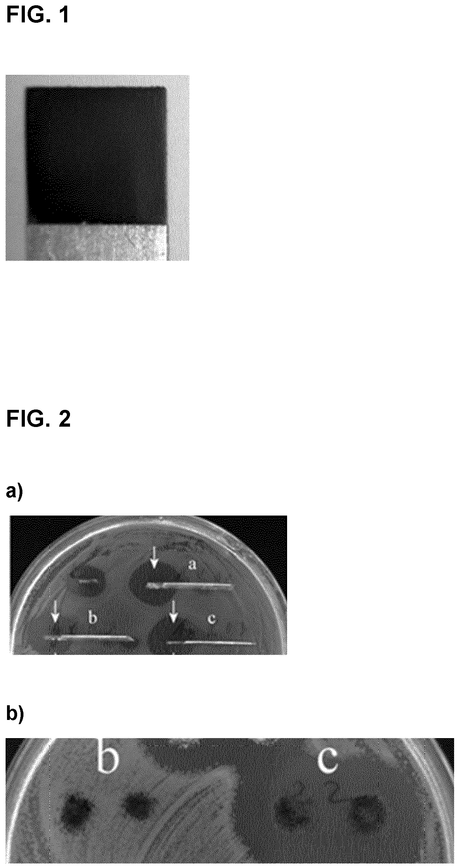

Um die antimikrobielle Aktivität des mikroporösen Rutheniumoxid-Netzwerkes auf Silber/Silberchlorid zu untersuchen, wurde wasserhaltiges Rutheniumoxid elektrochemisch auf Silberblech abgeschieden und die antimikrobielle Effizienz der Proben untersucht. Alle abgeschiedenen Schichten an Rutheniumoxid weisen eine dunkle, braungraue Farbe auf. **Figur 1** zeigt eine Rutheniumoxid-Schicht nach 10 Zyklen. XPS-Analysen haben gezeigt, dass in den elektrochemisch bzw. chemisch-reduktiv abgeschiedenen Rutheniumoxid-Schichten das Ruthenium in praktisch allen Oxydationsstufen nachzuweisen war.

Abscheidung der Ruthenium-Oxidschichten auf Silber: Auf einseitig poliertem Silberblech (1,0 cm x 2,5 cm) wurde wasserhaltiges Rutheniumoxid (RuOₓ · nH₂O) abgeschieden. Die beschichtete Fläche betrug jeweils 0,5 cm x 1,0 cm. Die Abscheidung der Oxidschicht erfolgte durch elektrochemisches Zyklisieren der Silberbleche in einem Potentialbereich von 0 V bis 0,84 V vs. NHE. Der verwendete Elektrolyt bestand aus 0,005 M RuCl₃, 0,01 M HCl und 0,1 M KCI bei einer Temperatur von 50°C. Die Abscheidung erfolgte in 10, 25 und 50 Zyklen. Da die Rutheniumoxid-Schicht aus einem Chlorid-haltigen Elektrolyten erfolgte, wurde die frei liegende Silberoberfläche direkt in Silberchlorid umgewandelt.

Für alle Proben ließ sich eine sehr gute antimikrobielle Aktivität feststellen. Bereits für eine Beschichtungsdauer von 10 Zyklen hat sich ein Hemmhof maximaler Ausdehnung gebildet **(****Figur 2a** **(a)**). Durch die Verlängerung der Beschichtungsdauer auf 25 Zyklen **(****Figur 2a** **(b)**) bzw. auf 50 Zyklen **(****Figur 2a** **(c)**) ließ sich keine weitere Steigerung der antimikrobiellen Effizienz erzielen. Obwohl die Rückseite der Proben abgeklebt worden war, zeigt sich dort eine ähnlich hohe antimikrobielle Aktivität, wie an der beschichteten Seite der Proben, was durch die gebildeten Sauerstoffradikale und das mikroelektrische Feld erklärt werden kann.

Überraschenderweise konnte eine deutliche antimikrobielle Wirkung auch durch ein Gemenge von Rutheniumoxid mit Silberchlorid-Partikeln erzielt werden.

In **Figur 2b** ist zu erkennen, dass Rutheniumoxid-Pulver*, im Mörser mit Silberchlorid beschichteten kleinen Silberpartikeln vermengt, einen großen Hemmhof auf dem Agar ausbilden und damit hohe antimikrobielle Wirkung zeigen (Probe c). Gleiches gilt auch für Rutheniumoxidhydroxyd-Pulver** (nicht im Bild gezeigt). Überraschender Weise zeigt reines Ruthenium-Pulver, vermengt mit kleinen Silberpartikeln, keinen Hemmhof und damit keine antimikrobielle Wirkung (Probe b). Dieser Versuch zeigt die Bedeutung der Rutheniumoxidbildung und des halbleitenden Silberchlorids für die antimikrobielle Ausrüstung.

[(*) Herstellung von Rutheniumoxid:
Ruthuna 478 Lösung wird mit Kaliumhydroxyd (10g/l) und Wasserstoffperoxid (5%) versetzt. Der schwarze Niederschlag wird abzentrifugiert, mehrfach mit destilliertem Wasser und Ethanol gewaschen und im Trockenschrank bei 70 °C getrocknet.

(**) Herstellung von Rutheniumoxidhydroxyd:
Ruthuna 478 Lösung wird mit Kaliumhydroxyd (10 g/l) im Verhältnis 1:1 versetzt. Nach 1 Woche wird der braune, flockige Niederschlag abzentrifugiert, mit destilliertem Wasser und Ethanol mehrfach gewaschen und im Trockenschrank bei 70 °C getrocknet.]

### Beispiel 2: Poröse Rutheniumoxid-Schicht auf Silber/Silbersulfid

Die Silbersulfid-Schicht wurde auf der mit porösem Rutheniumoxid-Netzwerk beschichteten Silber-Elektrode durch 5 min Tauchzeit in eine 1 %-ige Kaliumsulfid-Lösung bei Raumtemperatur erzeugt. Dabei bildete sich eine dunkle Silbersulfid-Schicht auf dem unter dem Rutheniumoxid-Netzwerk freiliegenden Silberblech aus. Gleiches Resultat wurde auch bei einer 30-minütigen Tauchzeit erzeugt, wobei die Silbersulfid-Schicht lediglich eine dunklere Färbung aufwies.

Die Rutheniumoxid-Silber/Silbersulfid-Oberfläche zeigte, dass die antimikrobielle Effizienz der Probe nach einer elektrochemischen Rutheniumoxid Abscheidungsdauer mit 10 Zyklen durch die Sulfidbehandlung noch einmal erheblich gesteigert wird **(****Figur 3****).** Der Durchmesser des Hemmhofes hat sich etwa gegenüber der Rutheniumoxid/Silberchlorid-Oberfläche verdoppelt. Aufgrund der äußerst geringen Silbersulfid-Löslichkeit (Löslichkeitsprodukt: 8x10exp -51 (25 °C)) kann eine Wirkung von Silberionen, wie in einem oligodynamischen Silbersystem, ausgeschlossen werden.

Das Aufbringen von porösen Rutheniumoxid-Schichten kann auch elektrolytisch oder chemisch-reduktiv auf partikulären Carriern, wie z. B. Glaskügelchen (D=40 µm) erfolgen. In **Figur 4** ist die antimikrobielle Wirkung von versilberten Glaskügelchen mit Rutheniumoxid-Beschichtung gezeigt, auf denen sowohl Silberchlorid als auch Silbersulfid in den durch das mikroporöse Rutheniumoxid-Netzwerk frei liegenden versilberten Oberfläche ausgebildet worden ist. Als Basis für den Chlorid- und Sulfid-freien Ruthenium-Elektrolyt diente in diesem Fall Rutheniumnitrosylnitrat. Silberchlorid wurde in den nicht mit Rutheniumoxid bedeckten Stellen der mikroporösen Abscheidungsstruktur durch eine Nachbehandlung in einer chloridischen Lösung gebildet. Das Silbersulfid wurde durch eine nachträgliche Behandlung mit einer 1%-igen Kaliumsulfid-Lösung bei Raumtemperatur ausgebildet. Wie in der **Figur 4** zu sehen, werden die *E*. *coli-*Bakterien sowohl bei der Rutheniumoxid/Silberchlorid-Variante (a-c) als auch der Rutheniumoxid/Silbersulfid-Variante (d-f) abgetötet. Nach der Inkubation in chloridischer Lösung weisen die Rutheniumoxid-Silberchlorid-Kügelchen durchgängig eine sehr hohe antimikrobielle Effizienz auf (Abb. 4a-c). Nach der Inkubation in Kaliumsulfid-Lösung erkennt man, dass die antimikrobielle Aktivität des Rutheniumoxid/Silbersulfid-Systems mit steigender Abscheidungsdauer von Rutheniumoxid ansteigt (Abb. d → f).

Die Glaskugeln mit der Rutheniumoxid/Silberchlorid-Oberfläche wurden auch gegen Mäusefibroblasten getestet. Wie **Figur 5** zeigt, besitzen die mit diesem Halbleitersystem beschichteten Glaskügelchen ebenfalls eine hohe biozide Wirksamkeit gegenüber adhärenten Mäusefibroblasten, was an der in der Fluoreszenzmikroskopie rot erscheinenden abgetöteten Mäusefibroblasten abzulesen ist.

### Vergleichsbeispiel 3 (nicht erfindungsgemäß): Poröse Vanadiumoxid-Schicht auf Silber/Silberchlorid bzw. Silber/Silbersufid

Vanadiumoxid wurde elektrochemisch auf Silber/Silberchlorid-Blech abgeschieden. Auf einem Silberblech (1,0 cm x 2,5 cm) wurde bei einer Stromdichte von 1 mA/cm² NH₄V₃O₈ · 0,5 H₂O anodisch abgeschieden. Die beschichtete Fläche betrug 0,5 cm x 1,0 cm. Die Abscheidung erfolgte aus einer 0,15 M Lösung von Ammoniummetavanadat bei einer Temperatur von 50°C. Die Abscheidungsdauer betrug 1, 10, 30 min und 1 h. Es bildete sich ein orangebrauner Niederschlag auf dem Silberblech. Durch das Tempern der Proben für 24 h bei 300 °C entstand eine einheitliche Schicht an Vanadiumoxid. Dickere Schichten von Vanadiumoxid lösten sich jedoch vom Silbersubstrat ab. Dies betraf die beiden Proben, die mit einer Abscheidungsdauer von 30 und 60 min präpariert wurden. Dennoch wurde die Probe für eine Abscheidungsdauer von 30 min auf ihre antimikrobielle Aktivität untersucht. Bereits für eine Abscheidungsdauer von 1 min lässt sich eine sehr hohe antimikrobielle Effizienz erzielen **(****Figur 6****,** Proben b, d, f). Die beschichtete Seite ist mit einem Pfeil markiert. Für eine Abscheidungsdauer von 10 min ist allerdings keine weitere Steigerung der antimikrobiellen Aktivität erkennbar **(****Figur 6****,** Probe d). **Figur 6****,** Probe f zeigt die antimikrobielle Aktivität einer Probe nach einer Abscheidungsdauer von 30 min, wobei sich jedoch der größte Teil der Beschichtung abgelöst hatte. Dennoch verfügt diese Probe über eine unvermindert hohe antimikrobielle Effizienz. Daher kann man davon ausgehen, dass bereits sehr dünne Schichten von Vanadiumoxid auf Silber eine hohe antimikrobielle Aktivität entfalten. Weitere Proben wurden zusätzlich für 5 min mit 1 %iger Kaliumsulfid-Lösung behandelt, so dass sich in den freien Räumen des porösen Vanadiumoxid-Netzwerkes eine Silbersulfid-Schicht ausbilden konnte. Die antimikrobielle Effizienz der Proben mit Silber/Silbersulfid-Halbelementen sind in **Figur 6****,** Proben c, e, g dargestellt. Die beschichtete Seite ist mit einem Pfeil markiert. Durch die Bildung der Silbersulfid-Schicht auf der nur 1 min mit Vanadiumoxid beschichteten Probe war kein Hemmhof auf dem Agar erkennbar **(****Figur 6****,** Probe c). Bei der längeren Abscheidungszeit entstehen dickere Vanadiumoxid-Schichten, die eine antimikrobielle Aktivität aufzeigen **(****Figur 6****,** Proben e, g). Obwohl bei der dickeren Vanadiumoxid-Schicht nach 30 min ein Teil der Oxidschicht abgeplatzt und nurmehr eine dünne Vanadiumoxid-Schicht zurückgeblieben war, zeigte diese von den untersuchten Vanadiumoxid-Silber/Silbersulfid-Schichten den größten Hemmhof und somit eine vergleichsweise hohe antimikrobielle Aktivität nach der Behandlung mit K₂S **(****Figur 6****,** Probe g). Dieses Ergebnis weist auf die Bedeutung der unterschiedlichen Oxidationszustände in der Oxidschicht hin. Bei der anodischen Abscheidung der Vanadiumoxid-Schicht ändert sich bei galvanostatischer Arbeitsweise das Elektrodenpotential mit wachsender Schichtdicke, so dass sich verschiedene Oxidationszustände des Vanadium-Kations ausbilden können und sich damit auch die katalytischen Eigenschaften verbessern.

Die elektrolytische Abscheidung von porösem Vanadiumoxid wurde auch auf Silber/Silberchlorid beschichteten partikulären Carriern erfolgreich durchgeführt. Für die elektrolytische Beschichtung der versilberten Glaskugeln mit Vanadiumoxid wurde das Trommelbeschichtungsverfahren angewandt. Es erfolgte für 15 min bei einer Umdrehungszahl von 340 U/min und einem Neigungswinkel von 70° die anodische Abscheidung aus Vanadiumoxid aus einer 0,15 M Lösung von Ammoniummetavanadat bei einer Spannung von 2,5 V. Nach der Sedimentation der beschichteten Perlen wurde der Elektrolyt dekantiert und die beschichteten Glaskugeln viermal mit 400 ml destilliertem Wasser gewaschen. Die Perlen wurden anschließend für 24 h bei einer Temperatur von 300 °C getempert, wobei sich Vanadiumoxid bildet. Man erhält helle, graubraune Perlen, die über eine hohe antimikrobielle Aktivität verfügen. **Figur 7** zeigt die antimikrobielle Effizienz der präparierten Glaskügelchen.

### Vergleichsbeispiel 4 (nicht erfindungsgemäß): Nickeloxid bzw. Nickelsulfid-Silber/Silbersulfid

Nach der Behandlung der Silber-Bleche mit Nickelchlorid (konz. NiCl2 *6 H2O, 24 h Tauchzeit, RT) ist optisch keine Veränderung der Silberprobenoberfläche zu beobachten. Das bedeutet, dass unter den beschriebenen Abscheidebedingungen eine nur sehr dünne Nickelbekeimung der Silberoberfläche erfolgt ist. Es ist daher nur eine sehr geringe antimikrobielle Aktivität der Probe erkennbar, da wenig Nickeloxid entstanden ist **(****Figur 8****,** links). Die antimikrobielle Wirkung wird durch die Abscheidung einer dickeren Nickeloxid-Schicht deutlich verbessert.

Interessant und unerwartet waren dagegen die Ergebnisse mit der sulfidischen Behandlung dieses nur mit Nickelkeimen ausgerüsteten Schichtsystems. Nach der Behandlung mit Kaliumsulfid bildet sich Nickelsulfid auf den auf der Silberoberfläche abgeschiedenen Nickelkeimen aus. Dabei wird auch in den freien und mit Silberchlorid bedeckten Silberoberflächenbereichen durch die K₂S-Behandlung das Silberchlorid durch das schwer lösliche Silbersulfid ersetzt. Das Schichtsystem Nickelsulfid-Silber/Silbersulfid zeigt überraschender Weise eine sehr hohe antimikrobielle Wirkung **(****Figur 8****,** rechts).

### Beispiel 5: Nachbehandlung der Halbelemente mit Sulfid-Ionen

Es wurde weiterhin untersucht, welchen Einfluss Sulfid-Ionen auf die Ruthenium-Elektrode ausüben. Die polierte Ruthenium-Elektrode wurde daher für 30 min in 1-%iger Kaliumsulfid-Lösung inkubiert. Anschließend erfolgte der Kurzschluss der Ruthenium-Elektrode gegen die Silber-Elektrode. Als Elektrolyt wurde 0,1 M Natriumperchlorat und 0,01 M Natriumchlorid verwendet. Durch die Inkubation der Ruthenium-Elektrode in Sulfid-haltiger Lösung wird deren Potential so stark in den negativen Potentialbereich verschoben, dass sich die Prozesse an den Elektroden umkehren. So erfolgt die Oxidation an der Ruthenium-Elektrode, während hingegen die Reduktion an der Silber-Elektrode abläuft. Die veränderten elektrochemischen Prozesse an den beiden Elektroden wirken sich auch auf die antimikrobielle Effizienz aus.

Eine Mischung von Silberpulver mit Rutheniumpulver, das zuvor in Kaliumsulfid-Lösung inkubiert war, zeigt eine unvermindert hohe antimikrobielle Wirkung **(Buchstabe a in** **Figur 10****).** Wird der K2S-Versuch hingegen mit Rutheniumoxid-Pulver, das nach der K2S-Behandlung mit unbehandeltem Silberpulver vermischt wurde, durchgeführt, so ist keinerlei antimikrobielle Effizienz erkennbar **(Buchstabe b in** **Figur 10****)**. Die Behandlung von Rutheniumoxid in Kaliumsulfid-Lösung inhibiert somit vollständig die antimikrobielle Wirkung der Probenmischung.

Ein identisches Bild ergibt sich, wenn neben Ruthenium bzw. Rutheniumoxid auch das verwendete Silberpulver zuvor in Kaliumsulfid-Lösung inkubiert wurde. Eine entsprechende Mischung von Silbersulfid mit K2S behandeltem Ruthenium ergibt eine antimikrobielle Wirkung **(Buchstabe c in Figur),** während hingegen die Mischung von Silbersulfid mit K2S behandeltem Rutheniumoxid keine antimikrobiellen Eigenschaften aufweist. **(Buchstabe d in** **Figur 10****)**

Das Ergebnis bestätigt einerseits, dass die Bildung von Silbersulfid keine nachteilige Wirkung auf die antimikrobiellen Eigenschaften der Probenmischungen ausübt. Andererseits besteht ein Unterschied zwischen Proben, die mit Ruthenium bzw. mit Rutheniumoxid angesetzt wurden. Offenbar reagieren Rutheniumoxid und Sulfid-Ionen zu einer stabilen chemischen Verbindung, die in Kombination mit Silber keine antimikrobiellen Substanzen freisetzt. Neben dem Verlust der katalytischen Aktivität der neu gebildeten Substanz könnte hierbei auch die Änderung der Potentiallagen oder eine verminderte elektrische Leitfähigkeit eine Rolle spielen. Eine Erklärung für die unvermindert hohe antimikrobielle Aktivität der Proben mit Sulfidbehandeltem Rutheniumpulver liefert die Strom-Zeit-Kurve gemäß **Figur 9****.** Nach der Inkubation der Ruthenium-Elektrode in Kaliumsulfid-Lösung hat sich eine dünne Deckschicht an Rutheniumsulfid gebildet. Durch den Kontakt mit Silber wird die Deckschicht oxidativ aufgelöst, so dass sich erneut eine katalytisch wirksame Schicht von Rutheniumoxid an der Elektrodenoberfläche bilden kann und sich die elektrochemischen Prozesse schließlich umkehren. Gemäß **Figur 9** fällt der Strom innerhalb der ersten vier Minuten deutlich ab. Auch nach 10 min stellt sich kein konstanter Strom ein. Zu diesem Zeitpunkt erfolgt die Oxidation jedoch noch an der Ruthenium-Elektrode. Nach 40 min ist zwischen beiden Elektroden kein Strom mehr messbar. Die anodischen und kathodischen Prozesse an den Elektroden heben sich gegenseitig auf. Anschließend kehrt sich die Polarität der Elektroden um, so dass die Silber-Elektrode nun die Anode darstellt, während an der Ruthenium-Elektrode wieder die Reduktion erfolgt. Die Reaktion von Ruthenium mit Kaliumsulfid ist somit nicht irreversibel, und nach einer Kurzschlussdauer von 4 Stunden ist an der Silber-Elektrode wieder ein anodischer Strom von 0,2 µA messbar.

Die Umkehrung der Elektrodenprozesse lässt sich auch anhand der nachfolgenden Bildung von Silberchlorid im Chlorid-haltigen Elektrolyten an der Silber-Elektrode verfolgen **(****Fig. 11****).** Nach einer Kurzschlussdauer von 1 h **(****Fig. 11 a****)** sowie 2 h **(****Fig 11 b****)** ist die Bildung von Silberchlorid im CV-Diagramm noch nicht nachweisbar. Zu diesem Zeitpunkt ist an der Silber-Elektrode bereits ein anodischer Strom messbar, der jedoch sehr gering ausfällt. Erst nach 3 h ist eine kleine Stromwelle der Reduktion von Silberchlorid erkennbar **(****Fig. 11 c****).** Nach 4 h erhält man jedoch im CV-Diagramm ein ausgeprägtes Stromsignal für die Silberchlorid-Reduktion **(****Fig. 11 d****)**.

### Beispiel 6: Überraschende Erhöhung der antimikrobiellen Wirksamkeit durch Ruthenium/Ruthenium-Oxid-Abscheidung nach einem indirekten, zweistufigen chemisch-reduktiven Abscheidungsprozess

Ruthenium kann mit unterschiedlichen starken Reduktionsmitteln (z. B. NaBH₄, N₂H₄) auf direktem, einstufigen Weg chemisch-reduktiv, beispielweise auf Silberoberflächen, abgeschieden und entsprechend Ruthenium/Ruthenium-Oxide auf der Silberoberfläche aufgetragen werden. Ruthenium/Ruthenium-Oxide können aber auch in einem zweistufigen Verfahren abgeschieden werden, wobei im ersten Schritt zunächst eine Aufoxidation von Ruthenium erfolgt und erst im zweiten Schritt die Reduktion des aufoxidierten Rutheniums zu Ruthenium und Ruthenium-Oxiden durchgeführt wird. Es war zu erwarten, dass die unterschiedlichen Verfahrenswege zur Ruthenium/Ruthenium-Oxid-Abscheidung auf Silberpartikeln zu einer vergleichbaren antimikrobiellen Wirksamkeit führen. Überraschender Weise wurde jedoch beim zweistufigen Verfahren eine um fast eine Größenordnung stärkere antimikrobielle Wirkung des Silber/Silber-Oxid//Ruthenium/Ruthenium-Oxid gegen S. aureus (MRSA) und P. aeruginosa im Vergleich zum direkten, einstufigen Ruthenium-Abscheideprozess festgestellt. Anders als bei der direkten, einstufigen Reduktion der Ru(III)-Ionen durch ein starkes Reduktionsmittel, beruht das indirekte, zweistufige Verfahren auf der Oxidation von Ru(III)-Ionen zu Ruthenium(VIII)-oxid [Chen 2011]. RuO₄ ist ein starkes Oxidationsmittel, das durch geeignete Reduktionsmittel in Ruthenium(IV)-oxid überführt wird, wobei das Substrat mit einer Schicht an Ruthenium(IV)-oxid überzogen wird. Die Oxidation von Ru(III)-Ionen zum RuO₄ erfolgt durch Natriumhypochloridt. Zur Stabilisierung von RuO₄ wird der Prozess in alkalischem Medium durchgeführt. Die Reduktion zum RuO₂ erfolgt durch Natriumnitrit.

### Präparation halbleitender Silber/Silber-Oxid//Ruthenium/Ruthenium-Oxid-Pulver durch chemisch-reduktive Abscheidung von Ru/RuOₓ auf Silberpartikeln nach einem indirekten, zweistufigen Verfahren zur Ruthenium-Abscheidung (AP 383):

Es wurden 50 g Silberpulver (Toyo Chemical Industrial, SBA10M27) in einem 2000 ml Dreihalskolben im Ultraschallbad mit 1000 ml deionisiertem Wasser aufgeschlämmt. Eine zusätzliche Rührung erfolgte mit dem KPG-Rührer bei 300 U/min. Nach 2 h wurde die braune Suspension durch Abdekantieren in einen weiteren 2000 ml Dreihalskolben überführt. Im Ultraschallbad und unter Rührung mit dem KPG-Rührer wurden 10 ml Ru(NO)(NO₃)₃-Lösung (10,83 g/l) zugesetzt. Dann wurde der Suspension eine Mischung folgender Lösungen hinzugesetzt:
300 ml NaClO-Lösung (14 %),
100 ml NaOH-Lösung (10 g/l),
87,5 ml NaNO2-Lösung (10 g/l).

Das Silberpulver färbte sich umgehend dunkel. Die Suspension wurde anschließend noch für 1 h im Ultraschallbad gerührt. Nach dem Sedimentieren des beschichteten Pulvers wurde der gelbe Überstand abdekantiert. Das Pulver wurde mit deionisiertem Wasser aufgenommen und abfiltriert. Nach dem Waschen mit deionisiertem Wasser wurde das Pulver mit Ethanol aufgenommen, abfiltriert und im Trockenschrank bei einer Temperatur von 60 °C getrocknet.

### Antimikrobielle Wirkung:

Überraschenderweise zeigen Silber/Silber-Oxid//Ruthenium/Ruthenium-Oxid-Pulver, bei denen das Ruthenium-Oxid im einstufigen bzw. zweistufigem Verfahren chemisch-reduktiv abgeschieden wurden, bei der antimikrobiellen Prüfung gegen MRSA-Bakterien (grampositiv) auffallend große Unterschiede. Silber/SilberOxid//Ruthenium/Ruthenium-Oxid-Pulver (AP823), die durch direkte Ruthenium-Reduktion auf Silberpartikeln mit dem starken Reduktionsmittel Natriumborhydrid (NaBH4) abgeschieden wurden, wiesen eine um nahezu eine Größenordnung geringere antimikrobielle Wirkung im Vergleich zu Silber/SilberOxid//Ruthenium/Ruthenium-Oxid-Pulvern (AP383) nach dem zweistufigen Verfahren auf. **Figur 12** zeigt die Wachstumskurven von MRSA-Bakterien, bei denen die beiden Ruthenium-/Ruthenium-Oxid//Silber/Silber-Oxid-Pulver mit verschiedenen Pulvermengen eingesetzt worden sind. Wie aus dem Verlauf der Wachstumskurven hervorgeht, zeigt das zweistufig hergestellte Silber/SilberOxid//Ruthenium/Ruthenium-Oxid-Pulver (AP383) bereits bei einer Einwaage von 2,5 mg Pulvermenge eine vollständige Abtötung der MRSA-Bakterien, wohingegen beim einstufig hergestellten Silber/Silber-Oxid//Ruthenium-/Ruthenium-Oxid-Pulver (AP823) die vollständige Abtötung erst bei 15 mg Pulvermenge erreicht wurde. Es zeigte sich also, dass bei der 2-stufigen Ruthenium-Abscheidung die antimikrobielle Wirksamkeit deutlich gegenüber dem 1-stufigen Verfahren erhöht ist, was daran zu erkennen ist, dass für eine vollständige Keimabtötung über die gesamte Versuchszeit von 8 h bei der Probe 383(vegleichbare Ru-Abscheidemethode wie 392) nur 2,5 mg Pulver und bei der Probe 823 > 10 mg benötigt werden, also um ca. das 4-6-fache weniger. Ein vergleichbar großer Unterschied in der antimikrobiellen Wirkung (ca. eine Größenordnung) wurde bei Untersuchungen der antimikrobiellen Wirkung beider Pulverarten (AP823) und (AP383) gegen P. aeruginosa PA 14 (gramnegativ) festgestellt.

Die antimikrobielle Wirkung ist besonders hoch bei Proben, die im ersten Halbelement Ruthenium (VI)-Oxid enthalten **(Tabelle 1).** Offensichtlich kann das Ruthenium(VI)-Oxid sowohl bei einer elektrochemischen wie bei der PVD-Abscheidung von Ruthenium erzielt werden, wenn bei der Ruthenium-Abscheidung ein Prozessschritt mit starker oxidativer Wirkung vorliegt (392 und RuOx). Die XPS-Oberflächenanalysen weisen auf eine Korrelation zwischen der antimikrobiellen Wirkung und der Zusammensetzung der Ruthenium-Oxide hin, wobei es möglicherweise auf ein bestimmtes Verhältnis von Ruthenium (VI) Oxid/Ruthenium (IV) Oxid ankommt. In jedem Fall ist das Vorhandensein von Ruthenium(VI)-Oxid für die erhöhte antimikrobielle Wirkung vorteilhaft oder gar notwendig.

**Tabelle 1: XPS-Analysenergebnisse - Herstellverfahren-Antimikrobielle Wirksamkeit**

| ProbenBezeichnung | Basismaterial | Ruthenium-Abscheideverfahren | Chemische Zusammensetzung (XPS- 3d Spektren) * | | | Antimikrobielle Wirksamkeit |
|---|---|---|---|---|---|---|
| | | | Ru(0) | RuO2 | RuO3 | |
| 825 | Silberpartikel | Chemisch-Reduktiv | 280, 1eV | 280,7 eV | | |
| | | Direktreduktion | ++++ | ++++ | n. d. | ++ |
| 392/383 | Silberpartikel | Chemisch-Reduktiv | Sehr geringer Anteil | Im breiten roten Peak RuO2 enthalten (hydratisiert). Substantieller Anteil ist RuO3 | 282,9 eV | |
| | | 2-stufig | | | | |
| | | Stufe 1: Oxidation | | | | |
| | | Stufe 2: Reduktion | | | | |
| | | | + | ++ | +++ | ++++ |
| "Ru" | PE-Folie | PVD-Sputtern | 280,0 eV | Geringer Anteil im Ru(0)-Peak | | |
| | | | ++++ | + | n. d. | ++ |
| "RuOx" | PE-Folie | PVD-Reaktives Sputtern (Oxidativ) | | | 282, 1 eV | |
| | | | | | ++++ | |
| | | | + | n.d. | | ++++ |

| | | | | | | |
|---|---|---|---|---|---|---|
| *) Referenzspektrum: Silber (Die Bindungsenergien der hoch aufgelösten Spektren wurden mit Hilfe der Ag3d_Spektren korrigiert | | | | | | |

Literatur-Bindungsenergien (eV):
- Ru (0): Ru 3d: 280, 2 eV; J. F. Moulder, W. F. Stickle, P. E. Sobol and K. D. Bomben: Handbook of X Ray Photoelectron Spectroscopy: A reference of Standard Spectra for identification and interpretation of XPS Data, J. Chastain and J. R. C. King, Editors, p. 115, Physical Electronics Eden Prairie, Minnesota (1995)
- RuO2: Ru 3d: 280, 66 eV; T. P. Luxton, M. J. Eick, K. G. Schekel; Journal of Colloid and Interface Science 359, (2011) 30-39
- RuO3: Ru 3d: 282, 5 eV; T. P. Luxton, M. J. Eick, K. G. Schekel ; Journal of Colloid and Interface Science 359, (2011) 30-39
   RuO3: Ru 3d: 282,4 eV; R. Kötz, H. J. Lewerenz and S. Stucki; J. Electrochem. Soc. 130, No. 4, 1983, 825-829.

### Beispiel 7: Unterschiede bei Ru/RuOx//Ag/AgCl bzw. AgOx Halbelement-Kombinationen

Neben der nasschemischen 2-stufigen Ru-Abscheidung auf Silber wurden Ruthenium und Silber auch durch PVD-Beschichtung auf einer PE-Folie aufgebracht, was den Vorteil hat, dass auf den PVD-Proben kein Silberchlorid vorliegt und möglicherweise festgestellte Unterschiede zweifelsfreier auf das Ruthenium-Halbelement zurückgeführt werden können.
(A) PVD-Abscheidung:
   - **(a)** Ruthenium-Sputtern auf Silber (Probenbezeichnung "Ru")
   - **(b)** Reaktives Sputtern (O₂) von Silber und Ruthenium (Probenbezeichnung "RuOx")
(B) Chemisch-reduktive Ruthenium Abscheidung:
   - **(c)** direkte Reduktion zur Ruthenium-Abscheidung auf Silber (Probenbezeichnung "825")
   - **(d)** Reduktion von Ruthenium zur Abscheidung auf Silber in dem bereits beschriebenen 2-stufigen Verfahren (Oxidation + anschließende Reduktion, (Probenbezeichnung "392").

Diese 4 Proben wurden anhand von Wachstumskurven und der Oberflächenzusammensetzung (XPS-Analyse) untersucht. Als Ergebnis hat sich gezeigt, dass bei beiden Untersuchungen Unterschiede innerhalb der jeweiligen Gruppe (A) bzw. (B), aber auch zwischen den Gruppen (A) und (B) aufgetreten sind, wobei eine erhöhte antimikrobielle Effizienz mit einer auffälligen Unterscheidung in der Oberflächenzusammensetzung, entsprechend der XPS-Analyse, korrespondierte.

**Figur 13** zeigt einen Vergleich der PVD beschichteten Proben Ru (P01) und RuOx (P03) im Agar-Test hinsichtlich ihrer antimikrobiellen Wirkung. Dabei zeigte sich, wie an der Ausbildung des Hemmhofes (Doppelbestimmung) abzulesen, dass die RuOx-Probe (P03) eine deutlich größere antimikrobielle Wirkung gegen *E.coli* besitzt als die Probe P01.

**Figur 14** zeigt XPS-Spektren der Proben Ru (a), RuOx (b) sowie 825 (c), 392 (d). Antimikrobielle Untersuchungen hatten wie oben beschrieben gezeigt, dass sich bei der chemisch-reduktiven Abscheidung und der PVD-Abscheidung von Ru/RuOx//Ag/AgCl bzw. AgOx-Halbelement-Kombinationen deutliche Unterschiede ergeben. Die XPS-Analysen zeigen in auffallender Weise Unterschiede, die mit den unterschiedlichen antimikrobiellen Wirksamkeiten korrespondieren. Wie in den Ru3d-Spektren (Figur 14) zu sehen, gibt es sowohl bei der Gruppe chemisch-reduktiv hergestellter Proben **825 (c)** (Kurve **(1)), 392 (d)** (Kurve **(2))** als auch der Gruppe der PVD-beschichteten Proben **Ru (a)** (Kurve **(3)), RuOx (b)** (Kurve **(4))** innerhalb einer Gruppe als auch zwischen den beiden Gruppen folgende auffällige Unterschiede:
- Bei der **Probe 825** (a) Kurve 1 wird ein schmales Signal vom metallischen Ruthenium (BE = 280,1 eV) gefunden. Das Spektrum der **Probe Ru** besteht zum größten Teil (65 %) aus metallischem Ruthenium und ca. 24 % werden dem RuO2 zugeordnet.
- Die Probe **RuOx (b)** (Kurve **(4)** - PVD-oxidierend gesputtert) enthält deutlich weniger Ru(0), wodurch die Kohlenstoffanteile deutlicher hervortreten. Die größte Komponente (BE = 284,4 eV) wäre Metallcarbid zuzuordnen (C stammt offenbar aus PVD-Reinigung der PE-Folie). Der Rutheniumanteil am Spektrum wird von dem Signal bei BE = 282,1 eV bestimmt, das etwa 85 % ausmacht und RuO3** zugeordnet werden kann. Die Halbwertsbreite dieser Komponente ist recht groß, so dass ein Beitrag weiterer Verbindungen zu dem Signal nicht auszuschließen ist. Die übrigen Ru-Anteile des Spektrums werden von Oxidhydraten des Ru(VI) oder höheren Oxidationstufen des Rutheniums verursacht.
   Die Probe **392 (d)** Kurve **(2)** ähnelt der Probe **RuOx (b)** Kurve **4** und enthält ebenfalls RuO3** in deutlicher Konzentration. Darüber hinaus sind jedoch weitere Verbindungen vorhanden, bei denen es sich um Oxidhydrate handeln kann. Aber es sind auch Ru-Verbindungen mit größerer Wertigkeit möglich. Der Ru(0)- und RuO2-Anteil ist klein.
   ***) Nach Literaturangaben (Tabelle 1) wird zwischen* 282,2 *eV und* 282,6 *eV **RuO₃** verortet.*

In den Sauerstoff-O1s-Spektren **(****Figur 15****)** sieht man eine Gruppierung der Proben, wie sie für die Ru3d-Spektren beschrieben wurden. Die Proben **Ru** und **825** ergeben praktisch identische Spektrenformen, die mit drei Komponenten angeglichen werden können. Bei BE = 530 eV werden Metalloxide erwartet. Die Komponenten bei größerer BE können Hydroxide und Hydrate repräsentieren. Allerdings sind aller Wahrscheinlichkeit nach wesentliche Anteile davon Adsorbaten zuzuordnen. Die Probe **RuOx** ist wohl wesentlich von den Adsorbaten beeinflusst. Daneben sind die O-Atome in den Rutheniumoxiden zu sehen. Die Probe **392** zeigt nur geringe Anteile an oxidischen Sauerstoffatomen. Der überwiegende Anteil ist in Hydraten gebunden. Dazwischen sind wohl noch Hydroxide zu finden.

### Beispiel 8: Licht hat praktisch keine Auswirkung auf die antimikrobielle Wirksamkeit

**Figur 16** zeigt am Beispiel einer Probe (825), die aus zwei erfindungsgemäßen halbleitenden Halbelementen in Pulverform zusammengesetzt ist, Wachstumskurven mit und ohne Lichtzufuhr, wobei im Rahmen der Messgenauigkeit keine Unterschiede in der antimikrobiellen Wirksamkeit mit und ohne Lichtzufuhr zu erkennen ist. Die Unterschiede in den Wachstumskurven bei sehr geringer Pulvereinwaage von 5 mg sind nicht auf sichtbare Lichteinstrahlung, sondern auf die Messungenauigkeit bei der Einwaage dieser sehr kleinen Pulvermenge zurückzuführen.

Wie in **Beispiel 5** und **Figur 10** gezeigt wurde, führen unterschiedlich mit K₂S behandelte Ruthenium- und Silber-Pulver bei einer elektrisch leitenden Halbelement-Kombination zu unterschiedlich starker antimikrobieller Wirkung. Die Sulfid-Behandlung (1% K₂S) von Ruthenium-Pulver sowie von Ruthenium-Oxid-Pulver als erstem Halbelement in Kombination mit dem zweiten Halbelement aus Ag/Ag₂S- oder Ag-Pulvern führt zu einer vollkommen unterschiedlichen antimikrobiellen Wirksamkeit:
- Die Kombinationen der Halbelemente RuOx/Sx//Ag sowie RuOx/Sx//Ag/Ag₂S zeigen überhaupt keine antimikrobielle Wirkung.
- Die Kombination RuS₂//Ag sowie RuS₂//Ag/Ag₂S weisen dagegen eine sehr hohe antimikrobielle Wirksamkeit auf.

Obgleich also RuOx und RuS₂ beide Halbleiter sind, ist es überraschend, dass eine Schwefelzufuhr nur den Ruthenium-Oxid-Halbleiter antimikrobiell unwirksam macht. Es kommt also nicht nur darauf an, dass ein Halbleiter vorhanden ist, sondern besonders auf die Ausformung des einzelnen Halbleiter-Halbelementes selbst. Andererseits zeigen Beispiel 5 und **Figur 9** am Beispiel einer Stromzeitkurve, dass ein RuS₂-Halbelement, mit dem zweiten Halbelement Ag/AgCl in einer wässrigen Lösung miteinander in Kontakt gebracht, seine Oberflächenzusammensetzung geändert hat und wieder eine antimikrobielle Wirksamkeit zurückerlangt, was auf ein komplexes Wechselspiel bei der Kombination zweier Halbleiter-Halbelemente hinweist. Die Ergebnisse der unterschiedlichen Ruthenium-Abscheidungsverfahren und der daraus resultierenden unterschiedlichen Halbleiter-Zusammensetzungen als auch der Kontakt kurzgeschlossener Halbelemente mit Lösungsbestandteilen, wie z. B. K₂S und die daraus resultierenden starken Unterschiede in Bezug auf die antimikrobielle Wirksamkeit der Halbelement-Kombinationen sind ein deutliches Zeichen dafür, dass es beispielhaft beim Ruthenium auf die Ausgestaltung des ersten Halbelementes ankommt, wenn eine hohe antimikrobielle Wirksamkeit gefragt ist. Auch der elektrisch leitende Kontakt zum zweiten Halbelement führt zu einer, die antimikrobielle Wirksamkeit wesentlich beeinflussenden, Veränderung des ersten, Ruthenium-haltigen halbleitenden Halbelementes.

Die **XPS-Analysen** zeigen mehrere Unterschiede in der oxydischen Zusammensetzung der untersuchten Proben. Auffallend, und möglicherweise für die erhöhte antimikrobielle Wirksamkeit ein Hauptverantwortlicher, könnte das Vorhandensein der sechswertigen Oxidationsstufe des Rutheniums, neben dem RuO₂ und dem metallischen Ru(0), in den Proben mit einer hohen antimikrobiellen Wirksamkeit sein. Insbesondere in den PVD-Proben, bei denen kein AgCl enthalten ist, kann von dieser Seite kein Einfluss auf eine Erhöhung der antimikrobiellen Wirksamkeit vorhanden sein.

### Literatur:

- [Guridi 2015]: Guridi, A., Diederich, A.-K., Aguila-Arcos, S., Garcia-Moreno, M., Blasi, R., Broszat, M., Schmieder, W., Clauss-Lendzian, E., Sakinc-Gueler, T., Andrade, R., Alkorta, I., Meyer, C., Landau, U., and Grohmann, E.: Materials Science and Engineering C50 (2015) 1-11
- [Anpo 1999]: Anpo, M., Che, M., Fubini, B., Garrone, E., Giamello, E., and Paganini, M. C.: Topic in Catalysis 8 (1999) 189-198
- [Paccioni 1996]: Pacchioni, G., Ferrari, A., Giamello, E.: Chem. Phys. Lett. 255 (1996) 58
- [Baetzold 2001]: Baetzold, R. C.: J. Phys. Chem. B 2001, 105, 3577-3586
- [Chen 2011]: Jing-Yu Chen, Yu-Chi Hsieh, Li-Yeh Wang and Pu-Wie Wu: J. Electrochem. Soc. , 158 (8) D 463-D468 (2011)
- [Keiko 2000]: Keiko Jyonosono, Abe Koichiro, Imato Toshihiko: Sensors and Materials Vol.12, No. 8 (2000), 491-507
- [Yin 2018]: Qiaoqiao Yin, Linxiang Tan, Qingqing Lang, Xiaoxia Ke, Lijie Bai, Kaiyan Guo, Ru Qiao, Song Bai: Environmental Volume 224, May 2018, 671-680
- [Xue-Gang 2019]: Zhang Xue-Gang, Guan Dan-Lin, Niu Cheng-Gang, Cao Zhong, Liang Chao, Tang Ning, Zhang Lei, Wen Xiao-Ju, Zeng Guang-Ming: Science of the Total Environment Volume 668, 10 June 2019, 730-742
- [Clauss-Lendzian 2018]: Emanuel Clauss-Lendzian, Ankita Vaishampayan, Anne De Jong, Uwe Landau, Carsten Meyer, Jan Kok, Elisabeth Grohmann: Microbiological Research Volume 207, March 2018, 53-64
- [Landau 2013]: Uwe Landau: Galvanotechnik, 1. November 2013, 2169-2184

## Patentansprüche

1. Bioaktive Zusammensetzung zur Abtötung von Zellen, welche mindestens ein erstes und ein zweites Halbelement umfasst, wobei die Halbelemente zumindest mit ihren jeweiligen Oberflächen derart miteinander in elektrisch leitendem Kontakt stehen, dass in Gegenwart von Wasser und Sauerstoff Kurzschlusselemente entstehen,
wobei das erste Halbelement mindestens eine halbleitende Verbindung mindestens eines Übergangsmetallelements umfasst, das über mehrere Oxidationsstufen verfügt und über katalytisch aktive Zentren einen Wechsel der Oxidationsstufen erlaubt, so dass am ersten Halbelement Sauerstoff reduziert wird und aktive Sauerstoffspezies entstehen, und wobei das zweite Halbelement mindestens einen elektrisch leitfähigen Silberhalbleiter umfasst, der von den Zellen oder organischer Materie abgegebene Elektronen aufnimmt, **dadurch gekennzeichnet, dass** die Übergangsmetallverbindung des ersten Halbelements Ruthenium, das in einer oder beiden der Oxidationsstufen VI und IV vorliegt, umfasst.

2. Bioaktive Zusammensetzung nach Anspruch 1, **dadurch gekennzeichnet, dass** das erste Halbelement Kationen des Übergangsmetallelements mit unterschiedlichen Oxidationsstufen umfasst.

3. Bioaktive Zusammensetzung nach Anspruch 1 oder 2, **dadurch gekennzeichnet, dass** die Übergangsmetallverbindung des ersten Halbelements mindestens ein Metalloxid, Metalloxyhydrat, Metallhydroxid, Metalloxyhydroxid und/oder mindestens ein Metallsulfid des Übergangsmetallelements umfasst.

4. Bioaktive Zusammensetzung nach einem oder mehreren der Ansprüche 1 bis 3, **dadurch gekennzeichnet, dass** der Silberhalbleiter des zweiten Halbelements über katalytische Aktivität verfügt.

5. Bioaktive Zusammensetzung nach einem oder mehreren der Ansprüche 1 bis 4, **dadurch gekennzeichnet, dass** der Silberhalbleiter des zweiten Halbelements in wässrigen Lösungen eine geringe Löslichkeit aufweist und gegenüber Inhaltsstoffen in der wässrigen Lösung chemisch stabil ist.

6. Bioaktive Zusammensetzung nach einem oder mehreren der Ansprüche 1 bis 5, **dadurch gekennzeichnet, dass** der Silberhalbleiter des zweiten Halbelements mindestens ein Silberoxid, Silberhydroxid, Silberhalogenid und/oder Silbersulfid umfasst.

7. Bioaktive Zusammensetzung nach Anspruch 6, **dadurch gekennzeichnet, dass** in das Halbleitergitter des Silberhalogenids Sulfid-Anionen eingebaut sind.

## Claims

1. A bioactive composition for killing cells, which comprises at least a first and a second half-element, wherein the half-elements are in electrically conductive contact with each other at least with their respective surfaces in such a way that short-circuit elements are formed in the presence of water and oxygen,
wherein the first half-element comprises at least one semiconducting compound of at least one transition metal element which has several oxidation states and permits a change of oxidation states via catalytically active centres, so that oxygen is reduced at the first half-element and active oxygen species are formed, and wherein the second half-element comprises at least one electrically conductive silver semiconductor which accepts electrons emitted by the cells or organic matter, **characterised in that** the transition metal compound of the first half-element comprises ruthenium which is present in one or both of the oxidation states VI and IV.

2. Bioactive composition according to claim 1, **characterised in that** the first half-element comprises cations of the transition metal element with different oxidation states.

3. Bioactive composition according to claim 1 or 2, **characterised in that** the transition metal compound of the first half-element comprises at least one metal oxide, metal oxyhydrate, metal hydroxide, metal oxyhydroxide and/or at least one metal sulphide of the transition metal element.

4. Bioactive composition according to one or more of claims 1 to 3, **characterised in that** the silver semiconductor of the second half-element has catalytic activity.

5. Bioactive composition according to one or more of claims 1 to 4, **characterised in that** the silver semiconductor of the second half-element has a low solubility in aqueous solutions and is chemically stable with respect to ingredients in the aqueous solution.

6. Bioactive composition according to one or more of claims 1 to 5, **characterised in that** the silver semiconductor of the second half-element comprises at least one silver oxide, silver hydroxide, silver halide and/or silver sulphide.

7. Bioactive composition according to claim 6, **characterised in that** sulphide anions are incorporated into the semiconductor lattice of the silver halide.

## Revendications

1. Composition bioactive pour tuer des cellules, qui comprend au moins un premier et un deuxième demi-élément, les demi-éléments étant en contact électriquement conducteur l'un avec l'autre au moins par leurs surfaces respectives de telle sorte que des éléments de court-circuit se forment en présence d'eau et d'oxygène,
dans lequel le premier demi-élément comprenant au moins un composé semi-conducteur d'au moins un es élément de métal de transition qui dispose de plusieurs degrés d'oxydation et permet, par l'intermédiaire de centres catalytiquement actifs, un changement des degrés d'oxydation, de sorte que l'oxygène est réduit sur le premier demi-élément et que des espèces d'oxygène actives se forment, et dans lequel le deuxième demi-élément comprend au moins un semi-conducteur d'argent électriquement conducteur qui absorbe les électrons émis par les cellules ou la matière organique, **caractérisé en ce que** le composé de métal de transition du premier demi-élément comprend du ruthénium qui est présent dans l'un des états d'oxydation VI et IV ou dans les deux.

2. Composition bioactive selon la revendication 1, **caractérisée en ce que** le premier demi-élément comprend des cations de l'élément de métal de transition ayant des degrés d'oxydation différents.

3. Composition bioactive selon la revendication 1 ou 2, **caractérisée en ce que** le composé de métal de transition du premier demi-élément comprend au moins un oxyde métallique, un oxyhydrate métallique, un hydroxyde métallique, un oxyhydroxyde métallique et/ou au moins un sulfure métallique de l'élément de métal de transition.

4. Composition bioactive selon une ou plusieurs des revendications 1 à 3, **caractérisée en ce que** le semi-conducteur d'argent du deuxième demi-élément possède une activité catalytique.

5. Composition bioactive selon une ou plusieurs des revendications 1 à 4, **caractérisée en ce que** le semi-conducteur d'argent du deuxième demi-élément présente une faible solubilité dans les solutions aqueuses et est chimiquement stable vis-à-vis des ingrédients dans la solution aqueuse.

6. Composition bioactive selon une ou plusieurs des revendications 1 à 5, **caractérisée en ce que** le semi-conducteur d'argent du deuxième demi-élément comprend au moins un oxyde d'argent, un hydroxyde d'argent, un halogénure d'argent et/ou un sulfure d'argent.

7. Composition bioactive selon la revendication 6, **caractérisée en ce que** des anions sulfure sont incorporés dans le réseau semi-conducteur de l'halogénure d'argent.
